# EUROPEAN PATENT SPECIFICATION

(11) **EP 1 788 920 B1**
(45) Date of publication and mention of the grant of the patent: **19.01.2011**
(21) Application number: 05754188.0
(22) Date of filing: 22.06.2005
(51) Int. Cl.: A47L 13/16, A47L 1/15

(54) **HAND-UTILITY INTERFACE**
ARBEITSHANDSCHUTZ
INTERFACE MAIN-UTILITAIRE

(30) Priority: 23.06.2004 GB 0413982; 19.08.2004 GB 0418485; 19.08.2004 GB 0418486; 01.10.2004 GB 0421844; 01.10.2004 GB 0422022; 01.10.2004 GB 0421847; 27.10.2004 GB 0423791; 29.01.2005 GB 0501877
(43) Date of publication of application: 30.05.2007
(73) Proprietor: Switchkey Intellectual Property Limited, Bucks SL7 3HN (GB)
(72) Inventor: POWELL, Michael Charlton, Switchkey Int. Prop. Ltd, Marlow, Bucks,SL7 3HN (GB); STOKES, Leslie James, Switchkey Int. Prop. Ltd, Marlow, Bucks,SL7 3HN (GB)
(74) Representative: Samuels, Adrian James
(86) International application number: PCT/GB2005/002454
(87) International publication number: WO 2006/000762

(56) References cited:
- WO-A-00/69322
- WO-A-95/31923
- WO-A-2004/098365
- US-A- 2 223 204
- US-A- 4 030 414
- US-A- 6 108 817
- US-B1- 6 482 168

## Description

### Technical Field

The present invention relates to a hand-utility interface that is wearable on the hand of a user. In particular, the present invention relates to a foamed block form interface suitable for use in cleaning and grooming applications.

### Background to the invention

Most of the cleaning tools presently available rely on a user directly holding an independent interface, such as a cloth, sponge or handle of the common bristle brush. In such cases, the user's hand is unprotected whilst conducting the task. Additionally, much of the Innate dexterity of the user's hand, in particular, the user's fingers, is lost.

It is an object of the present invention to provide a wearable hand-utility interface, which protects the hand of a user during the undertaking of various utility tasks (e.g. cleaning, grooming).

It is another object of the present invention to provide such a wearable hand-utility interface, which affords the user more of the dexterity of the user's hand, such that the interface can form itself to meet any surface, regardless of its complexity.

It is a further object of the present invention to provide a hand-utility interface, which allows the hand to be clenched, for example, for wringing out liquid from the interface, without causing discomfort to the wearer.

It is a still further object of the invention to provide a hand-utility interface, which is adaptable for use with different sizes of hand and different lengths of finger.

WO 95/31923 discloses a sponge with grooves extending through its thickness for the receipt of the fingers of a user's hand

### Summary of invention

According to the present invention there is provided a hand-utility interface as claimed in claim 1.

The foamed block body comprises at least two finger-channels of equal length for receipt of the second and third fingers of the user's hand. Suitably, these two finger channels have identical shape, form and/or dimension. By defining the two finger channels to have identical length in this way (which is different from a conventional glove, in which the second and third fingers of the glove would be of different length) the hand-utility interface is made suitable for ambidextrous use (i.e. it hand be worn on either the left or right hand). The two finger channels may also be arranged to be a mirror image, one of the other.

The channels fan out towards the finger tip end, thereby mirroring the natural fanned out configuration of the fingers of a user's hand.

Suitably, each finger-receiving channel narrows progressively along its length. It will be appreciated that the narrowing is towards the finger tip end of each channel. Such narrowing has been found to assist in retaining a user's fingers and hence in use, in retaining the interface to a user's hand. Suitably, the height of each finger-receiving channel reduces progressively along its length. Suitably, the width of each finger-receiving channel reduces progressively along its length. Suitably, the cross-section of each finger-receiving channel reduces progressively along its length.

Suitably, the depth of each finger-receiving channel is greater than that of the user's finger. Accordingly, in use the foam walls defining each finger-receiving channel surround the full height of a user's finger. Suitably, the foam above each received finger of the user partially overlaps the upper surface of that received finger. Again, this better assists finger retention.

Suitably, each finger-receiving channel has a curving under profile. Preferably, that curving under profile is such as to match the curved under profile of a user's finger when at rest (i.e. when in an untensed state). The finger-receiving channel may also be provided with a curving top line profile and/or and angled under profile.

Suitably, the foamed block body is provided with a first cutaway portion arranged in use, for accommodation, but not snug receipt, of the user's thumb. Suitably, the foamed block body is provided with a second cutaway portion arranged in use, for accommodation, but not snug receipt, of the user's little finger.

In one aspect, the foamed block body has three finger-receiving channels for receipt of the user's index, second and third fingers respectively, but no finger-receiving channel for receipt of the user's little finger.

Suitably, the foamed block body is provided with v-shaped channels for added flexibility.

In one aspect, the finger-receiving channels are defined by continuous walls of the foamed block body. In another aspect, the finger-receiving channels are defined by intermittent walls of the foamed block body.

Suitably, the foamed block body is provided with a palm-receiving portion shaped to receive a user's palm. Suitably, the palm-receiving portion has a domed profile.

Suitably, one or more of the finger-receiving channels is provided with a partial over finger tip cover. Suitably, one or more of the finger-receiving channels is provided with overhanging elements.

Suitably, the finger-receiving channels are defined in part by inner dividing walls having a height that increases from the finger tip end to the palm-receiving end of the body to define a yoked projection, which acts such as to retain the upper part of the user's hand to the body.

Suitably, divides are provided in the body running between neighbouring finger-receiving channels.

In one aspect, the foamed block body further comprises palm support means for securing said interface to the palm of a user's hand such that in use, both the palm support means and finger-receiving channels secure the interface to the user's hand.

In another aspect, the foamed block body comprises no palm support means for securing said interface to the palm of a user's hand such that in use, only the finger-receiving channels secure the interface to the user's hand.

The term 'hand-utility interface' (or simply 'interface') herein is used to mean a wearable block body form device or apparatus, which protects at least part of the hand of a user during the undertaking of various utility tasks (e.g. cleaning, grooming, abrading). The 'interface' provides an interface between the user's hand and the utility media, which in aspects comprises a utility tool or utility consumable (e.g. cleaning or polishing media) for use in performing a utility task.

In aspects, the hand-utility interface is designed to afford maximum comfort to the hand whilst maximising the work area covered by the hand and the efficiency of the cleaning task.

Suitably, the hand-utility interface is adaptable for use with user's hands of varying sizes.

Typically, the interface only part-encloses the user's hand (i.e. at least part of the hand and fingers are not enclosable thereby).

Preferably, the hand-utility interface in use, covers the users' fingers and at least part of the user's palm but leaves the top part of the user's hand and fingers uncovered. This embodiment provides enhanced user utility in terms of ease of hand and finger movements. In one aspect, the hand-utility interface is designed such that it covers only that part of the palm that can be comfortably reached by the fingers. When the interface comprises absorbent media, this provides the function that the interface can be efficiently wrung out by a simple clenching of the fist.

In embodiments, the hand-utility interface herein is also shaped to accommodate its putting on by the user such as in a one-handed operation that enhances ease and speed of user "pick up". This contrasts with the operation to put on most traditional gloves, which is a two handed operation.

The hand-utility interface comprises a block form body. The body has essentially two functions. Firstly, it provides a degree of protection to the user's hand whilst conducting utility tasks. Secondly it provides a support for the application of utility media by the hand.

Suitably, the body provides a support for suitable utility media, but flexes to allow movement of the hand.

Preferably, the body is shaped to provide a uniform, e.g. flat work surface (i.e. utility surface) that typically takes the form of a continuous pad in use, locating under the hand of the user. This contrasts with the non-uniform, rounded form, work surface provided by the un-gloved palm and underside of fingers of a user's hand.

The body is generally comprised of a foamed or sponge-like material. The material suitably comprises a synthetic polymer material that has a foamed structure (i.e. comprising foamed bubble features). In essence, suitable foam materials are those that offer the characteristics of 'sponge' such as its natural give and crushability, resilience and ability to absorb and carry liquid media. Suitable materials include 'open foam', where the individual bubbles are incomplete spheres, and 'closed foam', where the spheres are complete, this latter type having considerably less water absorption ability.

The body has a block form. That is to say, overall it has a generally block-like three-dimensional form. The body has plural (generally, three or four) finger-receiving channels defined therein. The finger-receiving channels may be provided to the block form body in any suitable manner including cutting out the channels or by injection-moulding the form of the body with the finger-receiving channels defined therein.

In one particular aspect, the block form body is produced by reaction moulding using viscoelastic foam (e.g. slow recovery foam). This process is especially suitable for producing a durable product that might have bristles or any other type of cleaning media applied. In another particular aspect, the block form body is produced by injection moulding.

In a variation herein, the block form foamed body is injected with viscoelastic foam. This variation allows that the side walls of the finger-receiving channels may in use, close over the top surface of a user's finger a little and significantly aid retention. It also renders the form of the body more flexible still and expandable, so better to deal with a greater variety of hand sizes and give great comfort to the wearer.

The surface of the body that in use, contacts the palm of the user (the 'palm piece') might be flat, or it might be domed better to locate it under the hand for added user comfort.

In one aspect, the 'palm piece' extends back to equal the extent that the fingers of the user's hand reach when closed against the user's palm. This aspect is particularly suitable for versions of the interface designed to enable a wringing out action.

In another aspect, the 'palm piece' is longer and extends further towards the wrist so that it covers the whole of the palm of the user's hand, and potentially extends further still, depending upon the resilience of the foam and its ability effectively to carry media for useful work. This aspect is particularly suitable for versions of the interface that are designed to carry a disposable wipe.

In one aspect, the body is also shaped such that in a line, more or less ahead of the second finger-receiving channel (i.e. that channel that in use, receives the second finger of a user), the form of the body produces a soft 90 degree angle, the lines of which are interrupted by the finger tip protecting ends of the body for the index and fourth fingers. The purpose is to produce a form that is good at getting into corners, for example where the wipe being used is for window cleaning. In use, the fingertip protecting ends of the body for the index and fourth fingers are suitably arranged to crush down, so providing, for example, a good form for sweeping a window frame immediately adjacent to the glass.

Depending upon the nature of the selected body, the perimeter (plan view) of the interface may extend out to produce a surface considerably bigger than the hand. To do this and allow that the extreme of the perimeter has sufficient inherent strength to perform useful work may require a more rigid/stiffer foam type.

In one aspect, the block form body is split between the finger-receiving channels to provide that each finger of a user can move independently of the others (i.e. each finger has its own foam channel).

In another aspect, moisture and fluids in general can be prevented from rising up through the foamed block body (e.g. through the open cells of the foam) and reaching the user's hand by the addition of a waterproof barrier layer to the block form body (e.g. running horizontally through the body).

In a further aspect, in order for the block form body to give the user's hand more protection from the surface being worked upon and to enable the block form body to apply more aggressive work action, one or more rigid layers of material (e.g. in the form of a plate or plates) is provided to the body. In one example, the one or more rigid layers sandwiches between the base of the body and whatever work medium is required.

In one aspect, the block form body is suitably produced by a process known as "deformation cutting" or "form profile cutting", which is a known process of manufacture for three dimensional cutting of block form bodies such as upholstery parts, automobile seat elements, packaging and other profiled parts out of flexible foams. In such a process the block form body is subjected to a compressive force (e.g. by downward force applied by a plate or roller) and cutting takes place whilst the body is in a compressed state. The advantages of using such a process are high speed and economic production.

In the process, the block-forming machine operates according to the compression system using templates (e.g. made out of aluminium). The template has a cavity of the desired shape of the block. The template is screwed onto table of the machine. The foam blank is placed onto the template. By means of a conveyor belt and a pressure roller, the foam blank is pressed into the template's cavity. The pressed foam is cut directly above the template during the automatic forward movement of the table. The cutting tool is a rotating band knife.

In general terms, the deformation cutting process used to produce the foam block cannot produce undercuts. In certain circumstances, it is desirable to have undercuts in the form of tabs that extend from the top of the walls of the finger-receiving channels. In use, these tabs hang over the fingers of the user. Suitably, the user's fingers pass downwards past the tabs and the tabs then assume a position above each finger, thereby assisting retention of the block form body on the user's hand.

If however, the block form body is produced in two parts, split through a line running horizontally at the point where the walls begin to widen towards their base, and if those two parts were then welded together, then the desired over hanging tabs could be provided. Further, the two parts of the block may be produced in materials of differing strengths, thereby giving extra control over its physical characteristics.

In another aspect, suitable over finger tabs are produced by stamp cutting a partially flexible membrane to be welded on top of the walls of the finger-receiving channels and in places protrude/extend out over one or more of the channels. Such a stamp cut membrane would likely be in one single piece, each element connected to the other at the fingertip locations.

Suitably, the hand-utility interface herein is arranged to cooperate with those elements common to all sizes of user hands. It is suitably configured to offer a fit for the majority (e.g. 90%+) of all adult hand sizes. Traditional glove forms account for this variable by offering different sizes of product or by use of stretch fabrics, whereas the present interface does so by providing means for securing the interface to a user's hand.

In aspects, the interface is adapted to have ambidextrous form. That is to say, a universal fit form where it is configured to work for either left or right hand.

The applicant has noted that there can be a problem with an ambidextrous form of the block form body: It is that in use, neither the third or fourth fingers of the user fully reach the end of their respective finger-receiving channels, for either the left or the right hand. In effect, the vacant space in the relevant finger-receiving channel moves from the right hand side of the block form body to the left hand side, depending upon which hand is applied.

By way of a solution, a band (e.g. horseshoe shaped) is provided to the block form body at the tip of each finger-receiving channel. The band is resiliently crushable in form, for example comprising a soft-walled fluid-filled sack, able to be crushed at one point and so expand at another. In use, when a user's hand is inserted the band crushes, thereby resulting in filling up of the otherwise vacant channel space.

Suitably, the natural tapering form of the user's hand / fingers is taken advantage of to provide for universal fit. The natural taper of the hand is present in two planes, namely that present on examination of the hand in plan view and that present in the side elevation.

Each finger-receiving channel is sized and shaped to snugly receive a finger of a user. The snug receipt is assisted by the resilience characteristics of the material comprising the body, which mean that the walls of each finger-receiving channel tend to give as the finger is inserted and naturally adapt to any further finger movement to maintain snug finger-receipt.

According to the invention the finger-receiving channels fan out (i.e. diverge or taper outwardly) from each other moving towards the finger tip end. This divergence may be enabled, at least in part, by increasing the thickness of the inner dividing walls between each the finger-receiving channel on proceeding from palm piece to finger tip end. The fanned out profile matches that of the natural fanned out profile of fingers from a user's hand.

Suitably, to assist snug finger-receipt, each finger-receiving channel is shaped such that it narrows towards the fingertip end.

Suitably, to assist snug finger-receipt, each finger-receiving channel is shaped such that the channel narrows (e.g. tapers inwardly) on moving towards the bottom surface of the channel (i.e. towards that surface found closest to the base of the body and deepest within the channel). This narrowing of finger-receiving channel is suitably achieved by inwardly tapering the profile of the walls that define each finger-receiving channel.

Suitably, to assist snug finger-receipt, each finger-receiving channel is shaped such as to define a part-circular inner cross-sectional profile.

Suitably, the depth of each finger-receiving channel is selected such that on receipt of a user's finger therein the walls defining the channel extend at least 0.6mm, preferably at least 0.8mm above the top of the user's finger.

Suitably, the finger-receiving channels are too narrow towards their bottom surface to accommodate the fingers of a user without compression of the walls that define each channel. Such compression is readily enabled by forming the walls of a foam that readily gives but also has a memory (i.e. is resilient) such that it returns to its original form on withdrawal of the user's finger. Overall, the desired effect is that the foam above the top of each user's finger tends to regain its memory position, partially closing over the finger, so acting to secure the body to the user's hand. When the foamed body is loaded with liquid, the liquid tends to promote this retention, by serving to resist its being crushed. Where the foam is forced to give (i.e. by the finger's presence within the channel) it does so, causing the displaced liquid to flood the adjacent "partial cells" of the foamed body and walls, including those above the finger line.

Suitably, to assist snug finger-receipt, each finger-receiving channel is shaped such that its bottom surface has a curved profile that mirrors that curved profile of the underside of the relevant user's finger in an outstretched but untensed configuration.

In one particular aspect, the means for securing the interface to a user's hand comprise palm support means for securing said interface to the palm of a user's hand and the finger-receiving channels for snugly receiving the fingers of the user's hand. In use, the palm support means and finger-receiving channels act in combination to secure the interface to the user's hand.

In another particular aspect, the means for securing the interface to a user's hand comprise only the finger-receiving channels for snugly receiving the fingers of the user's hand. In use, the finger-receiving channels act to secure the interface to the user's hand.

Each finger-receiving channel defines opposing side walls to at least partially encase a snugly received finger. Each side wall may either be a 'divider wall' that acts to divide a particular finger-receiving channel off from its adjacent neighbour(s) or a 'perimeter wall' that in use, locates adjacent to the outside of the first or fourth user fingers. The side walls may provide a finger support function, as a result of their resilient character. The sidewalls may however, also enable (and e.g. be shaped for) in use, grip by the fingers of the user. Thus, for example for any two adjacent finger-receiving channels (e.g. between the first and second, second and third or third and fourth fingers) the user may apply gripping force between his /her relevant fingers to the divider wall between the adjacent finger-receiving channels thereby gripping onto that divider wall.

The finger channels in general, have an elongate 'U' shape. In one, the finger channels are tapered along the channel. This tapering form is designed to assist user insertion of his/her fingers into each channel. In another aspect, the uppermost portion of the 'U' shaped channels closes in a little, better to close over the top part of the finger. Generally, the divider walls only extend back from the finger tip towards the palm so far as is allowed by the junction between fingers of a small, ladies hand.

Generally, the walls of the finger channels need to be sufficiently high that the fingers of the small, ladies hand are completely concealed in side elevation. The wall height is generally also sufficient that at least two thirds of the big male finger depth is concealed in side elevation. Suitably, the walls rise high enough so that the users' fingers may 'crimp together' to grip the walls and so support the entire interface that is under the relevant fingers.

In one variation, the walls of any or each finger channel are higher in one or more places and lower in one or more other places.

In other variations, the walls of any or each finger channel are continuous or alternatively, intermittent.

In a further variation, as an alternative to walls, there might be one or more upright elevations (e.g. stands) of suitable material. These elevations might be of any shape in plan and side view, but are most likely set to avoid abutment of the user's knuckle, in use.

In a further variation, the right and left perimeter walls (i.e. those outer walls of the first and fourth finger channels) extend back further over the palm piece, in order to provide improved lateral stability of the palm piece in use.

In aspects, any or each of the walls of the finger channels are arranged to rise up and return inwards such that on receipt of the users' fingers the tops of the walls partially close over the top of the fingers. The returning inwards action may occur at either one or both sides of the channel. In variations, the upper portion of the channels, as seen in end elevation, return in to partially cover over the upper surface of the finger to a greater or lesser degree.

In one variation, the returning in action is arranged to be constant throughout the whole length of the finger channel. In another variation, this action is intermittent (i.e. appearing in some parts of the finger channel and not in others).

In one aspect, the foamed body is provided with four finger-receiving channels.

In another aspect, the foamed body is provided with three finger-receiving channels arranged for receipt of the index, second and third fingers of a user's hand.

In one three finger-receiving channel embodiment, the foamed body is also provided (adjacent to the first and third finger-receiving channels) with two cut-away portions arranged in use, for accommodation, but not retained receipt, of the user's thumb and little finger.

In another three finger-receiving channel embodiment, the foamed body is also provided (adjacent to the first and third finger-receiving channels) with two cut-out portions arranged in use to provide space for the user's thumb and little finger.

The three finger-channel (and optionally two cut-away or cut-out portion) form of the interface provides ambidextrous utility. That is to say, it is readily receivable by either hand of the user.

Embodiments are envisaged in which one or more finger-channels are arranged to receive plural, particularly two, fingers of a user. In such embodiments it will be appreciated that the number of walls is necessarily fewer than in the standard four finger, three dividing walls, two perimeter walls embodiment.

In one embodiment, each finger channel is arranged to receive two fingers. That is to say, a first finger channel receives the first and second fingers and a second finger channel receives third and fourth fingers. A single divider wall separates the first and second finger channels.

In another embodiment, one finger channel is arranged to receive two fingers and two finger channels are arranged to receive a single finger. Divider walls separate each of the finger channels from its neighbour(s). Each of the 112, 121 and 211 permutations is envisaged.

In another embodiment, a single finger channel is arranged to receive all four fingers. The single finger channel has perimeter walls but no divider walls are present. In further embodiments, one or more finger channel divider walls are present together with either one or no perimeter walls.

The applicant has noted that a problem can arise in retaining the block form body to the user's hand and/or fingers, while the fist is clenched. By way of amelioration of the problem "V" incisions may be provided to the top of the walls of the finger-receiving channels. Alternatively, the volume of foamed body to be compressed when clenching the fist is reduced by providing depressions along the centre base of each finger-receiving channel.

Alternatively, the volume of foamed body to be compressed when clenching the fist is reduced by providing "V" or "Square" shaped channels, running crosswise (i.e. perpendicular to the finger-receiving channels) in the underside of the base of the block form body (i.e. the working surface). This is achievable by the foamed body blank being run twice through the deformation cutting process. Such incisions might run below the finger channel base line or they might be set to run through the channels.

Alternatively, one or more finger grips may be recessed into the wall of the each finger-receiving channel. Such grips might be injection moulded. Such finger grips might be extended outside any or all of the finger-receiving channels to provide grips to retain wipes. In aspects, such finger grips may partly or wholly replace the need for the use of the yokes, as described hereinafter. With no yokes in place and finger grips in place, a user's hand may simply descend vertically onto and pick up the block form body, making it a true "one-hand" pick up. This vertical descent pick up action is typically different from the pick up action where yokes are employed that typically require a two-handed pick up action because the hand to be associated with the block form body must be slid in laterally, under the yokes.

In a particular aspect, the block form body is arranged for ambidextrous use. That is to say, it is arranged such that it is readily use-able with either the left or right hand of the user. The benefit of ambidextrous product form is that one product meets all needs, so no need to make a choice at the point of sale.

In one form, particularly suitable for ambidextrous use, the block form body has four finger channels, and the two middle channels are produced the same length (i.e. both will accommodate the first and second longest fingers of a user). The two outer finger channels are also produced the same length (i.e. they are both produced long enough to accommodate the index finger of a user). It will be appreciated that in this form, the effect is that, the third and fourth finger channels are longer than need be for both left and right handed users.

In variations, the one or more walls do not extend sufficiently to provide protection in use, to the user's finger tips. Instead, the base part of the block body of the interface extends forward of the end finger tip position in use, so that the finger tips are "set-back" from harm.

In aspects, finger tip grips are provided, possibly injection moulded, to grip the finger tips of a users' finger, in use.

Suitably, the palm support means herein functions to support the body (e.g. palm-protecting part) of the interface and to retain it firmly against the underside of the user's hand. In general terms, the purpose of the palm support means is to prevent the body (particularly, the palm piece thereof) from drooping downwards because of its own weight and that of any cleaning media and mopped up liquids thereon.

Suitably, the palm support means secures the body of the interface to the base of the fingers and/or the palm of the user's hand.

Suitably, the palm support means takes the form of one or more resilient yokes. The yokes are shaped for receipt at the junction between the fingers of a user (i.e. at the junction of either the first and second, second and third, or third and fourth fingers).

Suitably, the yokes are shaped to cooperate with the natural taper common to all hands. The resilient nature of the yoke once again affords the glove to accommodate and adjust to various hand sizes.

Suitably, the one or more yokes have a T-form. In particular, each yoke comprises a vertical trunk with horizontally extended arms and legs. In use, the T-form yoke fits between a user's adjacent fingers.

In one aspect, each yoke comprises two pairs of independent arms, each pair mounted on a corresponding vertical trunk. This configuration allows even greater freedom of movement.

Suitably, in use with a large hand the vertical trunk of the yoke sits forward of the junction of finger and palm of a large hand, so that in use, the shorter fingers of a smaller hand may reach the end of the finger-receiving channels.

In one aspect, the portion of the yoke that is secured to the 'palm piece' part of the body is set back, relatively close to the wrist. This is done to provide that the palm piece itself is given its support as central to its weight as is possible, without allowing that these lowest portions of the yokes might be uncomfortable to the small hand when crushing the form so as to wring it out.

In one aspect, the yokes are produced as a single-piece having a base plate that connects them. The base plate may then be fixed to the 'palm piece' of the body.

In one particular aspect, the yokes have snap up-snap down form. This form, typically involved hinged yokes, enables a user's hand to descend vertically onto the block form body for engagement therewith rather than having to be slid into the yokes on the horizontal plane.

Suitably, a forward element of the yoke rises vertically from the body (e.g. by about 10mm) to form one half of a simple hinge. In side elevation, the working part of the yoke now forms a splayed "U" shape, with its cooperating element of the hinge at the bottom of the "U".

The hinged yoke defines two distinct positions. The first is the "at work" or "snap down" position (i.e. viewed in side elevation, the "U" is positioned with one of its arms lying flat on the base of the body and the other resembling a fixed yoke position). The second is the "waiting" or "snap up" position (i.e. the "U" form is pointing upwards).

The hand engagement action involves the user's hand descending vertically onto the hinged yoke such that the back most arm of the "U" is pressed down onto the body causing the forward arm of the "U" to close down against the back of the user's hand.

Suitably, the form and action of the yokes herein takes advantage of the natural tapering form of the user's hand.

In general terms, the side elevation taper of the user's hand is used to advantage when from its most forward point, the yoke returns back towards the wrist, in a curve that is first low to the palm for tight accommodation of a small, ladies hand's depth at junction of finger and palm, then gradually increases in height as it travels further back so that at its full height it comfortably accommodates a large, male hand's depth at this point. The form of this curve generally accommodates all of the in between hand sizes.

The form of this curve may be optimised by study of the form of the skin as it rises between the fingers. It can be seen that, at the junction of two fingers, the skin rises from its extreme forward position at palm level, and travels backwards and upwards in a gentle curve until it reaches and becomes the covering of the back of the hand.

Preferably, the interface comprises two or three resilient palm support members (e.g. yokes), each of which may comprise pairs of independent arms.

In aspects, the finger-receiving channels and/or palm support means are made from sprung steel wire or moulded (e.g. injection moulded) plastics or skinned foam.

In one aspect, the palm support means comprises a resilient framework that is arranged to carry support from the supported finger area to the palm area. Thus, as the forward portion of the body of the interface is supported so accordingly is the palm piece. The framework might be arranged so that it collapses comfortably within the hand when the interface is crushed for wringing out purposes.

In another aspect, the palm support means comprises strap (e.g. elasticised) that in use, passes over the back of the user's hand, thereby providing support to the palm of the user. The strap may be a single strap or it may comprise two or more straps arranged for engagement. Thus the end of the straps may be provided with suitable fixing means such as buckles, hook and eye fixings (e.g. Velcro, trade name) or adhesive fixings.

In another aspect, the palm support means is provided by providing the palm piece of the body with raised parts at each side that are designed to return in so as to partially close over the back of a received user's hand. An applied strip of resilient material might alternatively provide this returning in action e.g. a plastic material). The material is suitably sprung and formed so that pressure downwards at its centre point, causes the end portions to snap and releasably lock over the back of the hand.

In one aspect herein, the foamed block form body is injection-moulded such that it has a 'skin' on part or selected parts of or its entire surface. Such a skin is readily over printed for marketing purposes.

In one aspect, the entire body is provided with a skin to enhance its resilience in general terms and in particular to prevent drooping down of the palm piece. Such a fully skinned embodiment is particularly suitable for use with disposable wipes. By contrast, a no skin version is more suitable for use in applications where water absorption is an important factor.

Also envisaged are hybrid forms, where the body starts out fully skinned, but the skin of the base and optionally other non-hand contacting parts is removed to allow it to absorb liquid media. Such an approach may be used to provide a general mop-up product that allows a user's hand to remain dry in its use.

In one variation, the base of the body has a skin that acts to provide a waterproof layer and when used in combination with a wipe attachment serves to prevent evaporation of (e.g. cleaning) chemicals from the wipe. A skinned base also provide an ideal surface to carry, for example, a low tack adhesive for temporary securing of a wipe attachment.

The use of an injection-moulded form also enables ready chamfering of defined regions or lines on the base (e.g. at the perimeter thereof) for optimal retention of a wipe attachment.

With regard to forms of the finger-receiving channels in which the upper portion of the walls is made to close in over the top of the finger, the presence of a skin acts to ease finger access and promote the return back of the form over the top of the finger. This is a particular benefit when it is desired that the hand be simply pressed down onto the interface in order for it to be picked up.

In embodiments herein making use of yoke elements, the yokes are suitably produced in the same injection mould process as the body and the strength of the yokes is enhanced by also providing them with a skin.

Optionally, the interface is provided with an ancillary interface such as in the form of a flexible backing sheet. This ancillary interface may be shaped and sized such as to enhance the coverage of the user's hand. The ancillary interface may also be provided with attachment means (e.g. in the form of snap-fit contourings) for attachment to the glove.

Suitably, the interface additionally comprises means to receive one or more utility attachments. As used herein, the term "utility attachments" refers to attachments having a useful function. For example, the utility attachments may take the form of tools for any useful purpose.

Suitable purposes include cleaning, washing and use in household tasks; DIY purposes including sanding, painting, shaping and forming; medical purposes; patient care purposes such as bed bathing; automotive car care including washing, polishing, leathering and interior cleaning; health and beauty purposes such as ex-foliation, massage, application of oils/lotions; gardening purposes such as house plant leaf cleaning/treatment; shoe and boot polishing; window cleaning; grooming of humans and of animals. Indeed, the interface may find utility in pretty much any and every task managed by hand.

The utility attachments may either be permanently attached to the interface or reversibly receivable by the interface. For example, the interface and utility attachment may be formed as cooperating elements, the utility attachment being interchangeable and or replaceable.

The means to receive utility attachments may comprise one or more circular recesses. These may provide the means to locate cleaning media and provide the home, for example, for bristle bunches. Suitably, the means to receive utility attachments may comprise at least one female socket for receiving a male counterpart situated on a utility attachment. The means to receive utility attachments are typically positioned at the underside of the block form body.

In one aspect, the releasable attachment of the utility attachment (e.g. in the form of a cloth wipe) to the body is as follows:

The periphery of the cloth wipe (e.g. shaped to cooperate with the body form) is printed with wax, or some other water repellent, to produce a flat non-cloth surface, and the cooperating periphery of the body is printed with "post-it note" (trade mark) type low tack adhesive.

Further, the wax printing on the wipe may be arranged to give it a degree of resilience / formability. This enables stamp forming of the wipe to give it an up-turned edge, so to reduce the danger of it getting caught and ripped off in use in the work situation. The up-turn is typically no more than 30 degrees, because of the need to stack the wipes. The printing/stamping may in aspects, be combined with the die cutting operation, to make it a one hit process.

As an alternative, "paper engineering" may be used as a means of fixing wipe to the body, such as of the type used in disposable nappy fixings. In aspects, the standard wipe fabric can be roughed up on one side to produce attachment loops for attachment to suitable hooks on the periphery of the underside of the body.

In aspects, the side wall (i.e. outer wall) of the block form body is provided with means for attachment of the utility attachments. In particular, variations are envisaged wherein such means are provided for attachment of a wipe (e.g. cloth wipe) to the block form body. Such attachment provides the advantage that in use, the wipe covers both the utility surface (e.g. underside) and at least part of the side wall of the block form body.

In one particular aspect, one or more attachment features defining attachment target areas are provided to the side wall of the block form body. Suitably, in use the wipe covers the base of the block form body and rises up the side walls thereof to their full height. This provides the advantage that, where the surface to which the hand-utility interface is being applied (e.g. for cleaning thereof) alters through 90 degrees, the margin of both surfaces is cleaned.

Suitably, each attachment feature comprises a non-absorbent material having protrusions provided thereto, such that in use the wipe is mechanically (e.g. frictionally) retained by interaction with the protrusions. Suitably, the protrusions take the form of a series of teeth (i.e. not unlike the cutting edge of a saw) or a series of spikes or hooks.

In one aspect, the attachment feature takes the form of a continuous strip arranged to run along a substantial part of the side wall of the block form body. Alternatively, plural attachment features (e.g. tab form) are employed, each arranged in series fashion spaced around the wall.

Various materials may be used to form the or each attachment feature, but it is important that the material used is relatively thin and that it has a degree of pliability, so that it can not represent any danger of marking or scratching the surface to which the hand-utility surface is applied (e.g. in a cleaning operation using a wipe).

In use, the attachment feature(s) may be arranged such that the teeth-like protrusions are defined at any suitable position relative to the wall, though preferably the teeth present themselves above the upper part (i.e. that part distant from the utility surface) of the side wall.

One suitable material for use in construction of the attachment feature(s) is acetate, for example of thickness from 0.1 to 0.2mm (e.g. 0.13mm). Acetate provides the advantage that it is impervious to the moisture in the wipe.

The protrusions (e.g. teeth) may rise vertically from the attachment feature, or they may be produced at an angle thereto so that they stand proud from the side wall. As a further alternative, static electricity may be employed as a temporary fixing means. As a further alternative, the wipe is printed with a cling-promoting material that causes it to cling to the block form body.

The utility attachments may take the form of bristles, spines, hooks, hair, sponge, leather, fabric pads, scourers, abrasives or wire wool.

The utility attachments may also comprise vacuum elements. In one vacuum aspect, a resilient 'fish-tail' nozzle attaches to the under side of the interface. Leading therefrom a very light weight hose goes back, under the wrist and is supported mid way between wrist and elbow by a loop or hook form which goes over the arm. Suitably, a flexible membrane covers the underside of the body. Further, this flexible membrane extends to provide a "skirt" positioned outside the bristles, running around the outside of the palm and up the outside of the index and little finger, once again preventing loss of suction and promoting that the vacuum is available under the finger tip bristles. The bristle part of this particular tool is in the form of a flexible membrane with bristles lining the side of each finger and surrounding the underside of the glove. The vacuum then draws down the bristle "avenue" underneath each finger, and generally around the palm.

In another aspect, the interface incorporates means for using liquids and gasses as "tools", both flowing out through and being drawn in through attachable media. A reservoir for dispensing such gasses and or liquids may be additionally incorporated as an integral or separate, but connected, feature of the claimed invention.

In one embodiment, the utility attachments are permanently attached to the interface. In another embodiment, the utility attachments are removable and/or exchangeable.

The utility attachment is particularly suitable for use with wipes (e.g. cloth-form). The wipes may be comprised of any suitable woven or non-woven material of either natural or synthetic origin. The wipes may be used for a variety of purposes including the picking up of detritus (e.g. crumbs) from a kitchen work surface; other household uses including disinfecting, cleaning and polishing; mother and baby hygiene; hospital uses including patient hygiene and pre-operation preparation; veterinary uses including animal care in general; office and other commercial premises cleaning; automotive uses such as cleaning and polishing.

Wipes are commonly provided with a chemical formula that rapidly evaporates. In their current form, i.e. in use under the hand, the wipe is free to 'breath' from its upper surface; accordingly its life span and performance are needlessly reduced. In aspects, the upper surface of the wipe is provided with a waterproof membrane, so that it can't breathe that way, and its in-use lifetime is improved. One approach to achieving this is to give the wipe a fixed membrane. The other approach is to give the hand-utility interface herein, a fixed membrane. The advantage of the latter is that the cost is reduced to one membrane for any number of wipes. However, if both wipe and the hand-utility interface herein had such a membrane, it might be possible to use static electricity as an alternative means of securing wipe to the interface.

The wipe used under the hand, is pressed into action only by four narrow lines (the underside of the fingers), and the periphery of the palm, this is inefficient. The wipe applied by means of the hand-utility interface herein is evenly applied over the whole of its surface. Moreover, because of the interface's ability to adapt to irregular surfaces, the performance is greatly enhanced.

Current wipes unfold to be bigger than the hand and can dry out long before it is possible, evenly to apply the whole of its surface to a particular wiping. This is less so for a wipe applied by the interface herein. Current wipes used directly under the hand demand that the user's hands are then washed, not so when the wipes are used with the hand-utility interface herein.

The chemicals used in current wipes have to be appropriate for direct, constant contact with the skin, and so are limited in their aggressiveness, not so where the wipes are used with the hand-utility interface herein in that the interface protects the hand from chemical contact.

Because of its moisture and rapid evaporation, the current wipe is particularly cold to the touch, less so when the wipe is used with the hand-utility interface herein which is generally dry, and warm because of its foam insulation characteristics.

Current wipe forms are typically very thin and give the user's hand little protection from the impact of surfaces encountered, not so when used with the interface herein which provides a very comfortable barrier between the hand and whatever it meets. In particular it provides a buffer for each finger tip, to absorb impact to reduce the discomfort of "stubbing". By the same means it protects the finger nails.

In one aspect, the block form body of the hand-utility interface is shaped to cooperate with a base station. Suitably, the base station is in this aspect provided shaped to receive the body such that, when the hand pushes the body into the base station, the interface is received in a 'parking' configuration.

In one aspect, the base station herein is integral with a container for use in containing suitable wipe attachments (e.g. a tub of wipes). For example, the interface is arranged to mate with a recessed base station within the lid of the container. Further, the container might be designed for wall mounting.

Suitably, the container for the wipes is sized and shaped to both contain a stack of wipes and such that the block form body of the may be readily brought into contact with the stack to enable ready attachment of a wipe (generally that located at the top of the stack) thereto.

In a preferred usage mode, simple pressure contact of the block form body with the stack of wipes results in co-operative attachment of a wipe thereto. In particular, this pressure contact results in suitable interaction of the wipe with one or more attachment features provided to the side wall (i.e. outer wall) of the block form body for attachment thereto.

Suitably, Velcro (trade name) strips are applied to the underside base and side walls of the block form body to assist adherence of a wipe or other cleaning media (e.g. adhesive pad) thereto. In one suitable configuration, the Velcro (trade name) strips run vertically up the side walls from the base. The barbs of the Velcro (trade name) may be arranged to be unidirectional (e.g. arranged to point up the side walls of the block form body so that any gravitational pull on the wipe assists to fix that wipe to the block form body. The surface of the wipe may be loose or open or rough to assist the engagement with the barbs. The angles of the barbs may be selected to optimise engagement with the wipe during the engaging movement of the block form body with the wipe.

Suitably, the container for the wipes (e.g. in tub form) is sized and shaped such that when wipes are stacked therein a portion (typically, a central portion) of each wipe adopts a flat configuration and another portion (typically, the edge portions) of each wipe adopt a standing configuration (i.e. rising up at an angle to the flat portion). Preferably, each has a bowl-like profile (i.e. flat base and rising up sides) and the wipes stack in a configuration not unlike a stack of cup cake paper containers.

Suitably, packaging is provided for separately containing a hand-utility interface and wipes for use therewith. The packaging may comprises a housing arranged to be reversible foldable from an 'unfolded' access configuration to a 'folded' storage configuration.

Suitably, the packaging housing is provided with a first recess sized and shaped to contain a stack of wipes and a second recess sized and shaped to contain a hand-utility interface.

Suitably, the wipe-containing recess has a vertical outer wall and a sloping inner wall adjacent to the fold line. The sloping inner wall is shaped to assist dragging of a wipe there over.

Suitably, the wipe-containing recess is covered by seal sheet which purpose is to prevent evaporation of the cleaning agent from the contained wipes. Suitably, the seal sheet has one edge permanently fixed to the packaging housing and its other edges reversibly fixed to the packaging housing by resealable adhesive means such that when in a sealing configuration the sheet covers the whole recess.

Suitably, the interface-containing recess has vertical walls that are roughened or abraded. Suitably, the interface-containing recess is partly of full depth and partly of progressively reducing depth.

In alternatives, the wipes may be pre-formed (e.g. moulded) to adopt a suitable profile or the forming may be *in situ,* that is to say the container itself is used to define the profile thereof. In addition, the wipes may be provided with suitable (e.g. "V-shaped") cut outs around the perimeter thereof to more readily enable the adoption of the desired profile for stacking.

In one aspect, edge portions of the wipe (which in the stacked configuration, form the rising up sides) may be loose woven to assist attachment to the attachment features, or indeed the whole wipe might be so woven.

In variations, any of the flat and/or rising up portions of the wipe may be provided with markings (e.g. colours, printed graphics or textural) to assist the user in bringing the block form body accurately into pressure contact with the wipe at the top of the stack for picking up thereof.

Suitably, each wipe is provided with a tab whose surface is dry (e.g. waxed) and such as to provide a non-cleaning agent impregnated finger hold area to the user for use in pulling a spent wipe from a hand-utility interface.

Suitably, the container for the wipes (e.g. in tub form) is arranged such that it presents a resilient surface to the bottom wipe of the stack. Suitably, the surface is of sprung plastic form. More suitably, the surface has the form of a dome in the centre of the base area of the container, which when pressed down causes arm elements which extend from the dome, to press the stack of wipes against the side walls of the block form body so pressing the wipe onto attachment features provided thereto. Suitably, the sprung element co-operates with the walls of the container in order to perform this assisted attachment operation.

In another aspect, the invention provides a kit of parts comprising a hand-utility interface as defined *supra* and a set of utility attachments or media as defined *supra.* Optionally, the kit of parts further comprises a base station for said interface.

### Brief description of the drawings

The invention will now be described further with reference to the accompanying drawings, in which:-
Figure 1 shows a plan view of a hand-utility interface which is not in accord with the present invention;
Figure 2 shows a plan view of a second hand-utility interface in accord with the present invention;
Figure 3 shows a sectional view along the line X-X of two finger-receiving channels of the second hand-utility interface of Figure 2;
Figure 4 shows a sectional view along the line Y-Y of a finger-receiving channel of the second hand-utility interface of Figure 2;
Figure 5 shows a plan view of a third hand-utility interface which is not in accord with the present invention;
Figure 6 shows a plan view of a fourth hand-utility interface which is not in accord with the present invention;
Figure 7 shows a plan view of a fifth hand-utility interface in accord with one aspect of the present invention;
Figure 8 shows an end elevation view of the finger tip end of the fifth hand-utility interface of Figure 7;
Figure 9 shows a side view of the fifth hand-utility interface of Figure 7;
Figure 10 shows a plan view of a sixth hand-utility interface which is not in accord with the present invention;
Figure 11 shows an end elevation view of the finger-receiving end of the sixth hand-utility interface of Figure 10;
Figure 12 shows a side view of the sixth hand-utility interface of Figure 10;
Figure 13 shows a plan view of a seventh hand-utility interface in accord with one aspect of the present invention;
Figure 14 shows a cross-section through the finger channels of the seventh hand-utility interface of Figure 13;
Figure 15 shows a side view of the seventh hand-utility interface of Figure 13;
Figure 16 shows a plan view of an eighth hand-utility interface in accord with one aspect of the present invention; and
Figure 17 shows a side view of the eighth hand-utility interface of Figure 16.

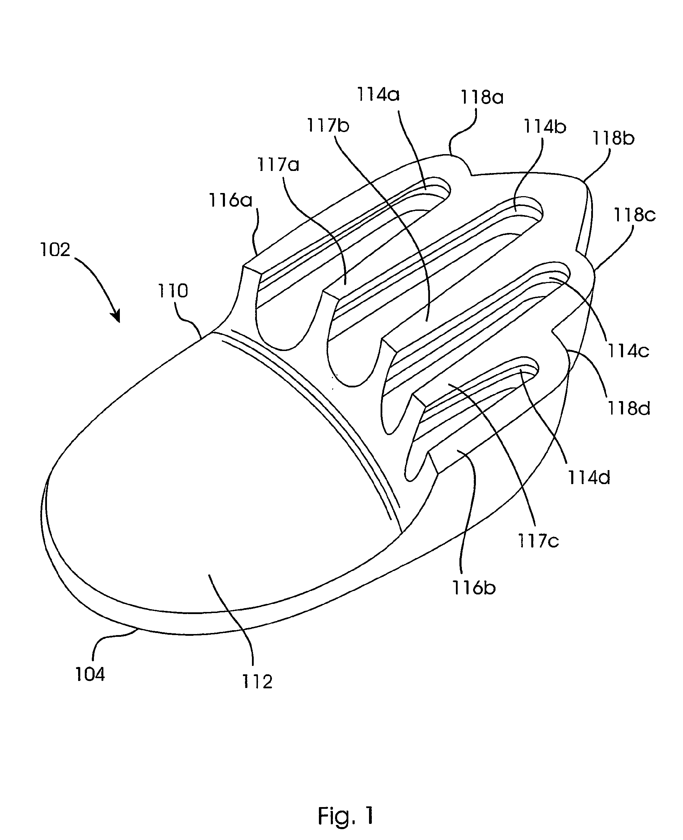

Referring now to the drawings, Figure 1 illustrates a hand-utility interface herein 102 herein having a block form body 110 comprised of a polymeric foam (e.g. open cell) material. The body 110 is shaped to receive in use, the palm and fingers of a user and is provided with a palm-receiving portion 112 having a gently domed surface to mirror the surface of a received user's palm and four elongate U-shaped finger-receiving channels 114a-d. The finger-receiving channels 114a-d may be seen to be defined by two outer walls 116a-b and three inner dividing walls 117a-c, which stand proud from the base 104 of the interface 102. It may be noted that the finger-receiving channels 114a-d fan out (i.e. diverge) towards the finger tips. This is in part enabled by the fact that the thickness of the inner dividing walls 117a-c increases on proceeding from palm to finger tip end.

The tip ends 118a,c-d of the index, third and fourth fingers of the body 110 may be seen to define a generally soft, rounded profile whereas that tip end 118b of the second (i.e. longest) finger has a generally 90° (right angled) profile. This form of profile eases the insertion of the second finger tip end 118b into corners for cleaning such as for example, where the interface is used for window cleaning. The finger tip ends 118a, 118c of the body 110 for the index and third fingers are suitably arranged to crush down, thereby providing an improved profile for sweeping a window frame immediately adjacent to the glass.

In use, the finger channels 114a-d provide the means to retain the interface on the user's hand. The user inserts a finger into each respective finger-receiving channel 114a-d where each finger is snugly received. The snug receipt is assisted by the resilience of the foam material comprising the body 110 which mean that the relevant walls 116a-b, 117a-c of each finger-receiving channel tend to give as a finger is inserted and naturally adapt to any further finger movement to maintain snug finger-receipt. In a usage operation, the user's fingers grip the divider walls 117a-c of the finger-receiving channels 114a-d, thereby retaining the finger-receiving part of the body 110 adjacent to the fingers.

The independent flexing of each of the finger-receiving channels 114a-d contributes to the ability of the glove to both protect the user's palm and fingers without hampering the movement of the user's hand and fingers.

The underside base 104 of the interface 102 has a uniform flat surface (not visible) that is shaped to receive utility attachments or media (e.g. cleaning media).

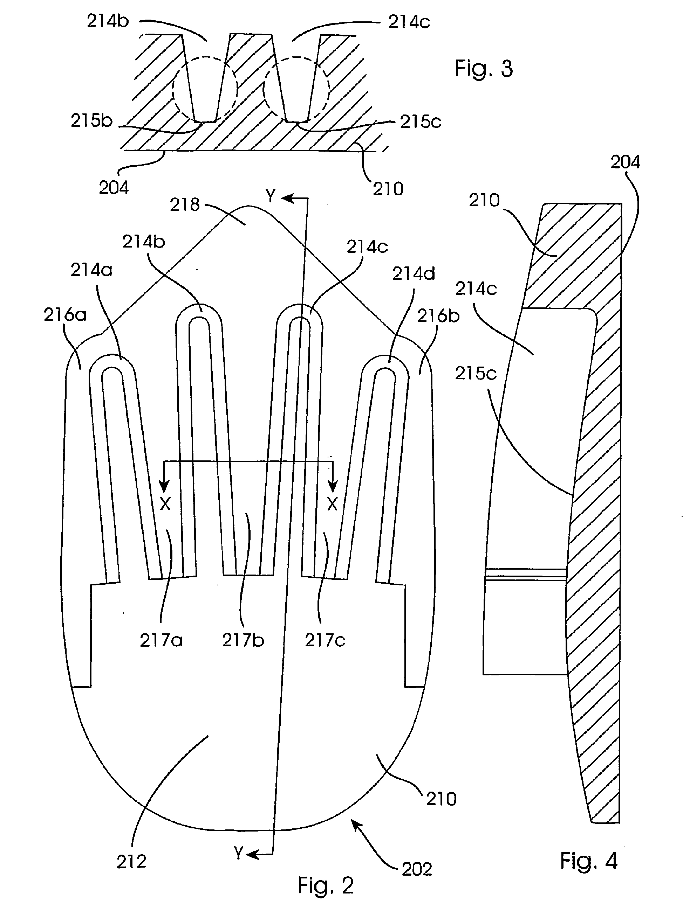

Figures 2 to 4 illustrate aspects of a second hand-utility interface herein 202 herein that may be appreciated to be a variation of the first hand-utility interface of Figure 1. The interface 202 has a block form body 210 comprised of a polymeric foam material (e.g. open cell foam). The body 210 is shaped to receive in use, the palm and fingers of a user and is provided with a palm-receiving portion 212 shaped to receive a user's palm and four elongate U-shaped finger-receiving channels 214a-d. The finger-receiving channels 214a-d may be seen to be defined by two outer walls 216a-b and three inner dividing walls 217a-c, which stand proud from the base 204 of the interface 202. It may be noted that the finger-receiving channels 214a-d both fan out (i.e. diverge) and narrow towards the finger tips. This is in part enabled by the fact that the thickness of the inner dividing walls 217a-c increases on proceeding from palm to finger tip end. The tip end 218 of the body 210 has a generally 90° (right angled) profile. This form of profile eases the insertion of the tip end 218 into corners for cleaning.

In use, the finger channels 214a-d provide the means to retain the interface on the user's hand. The user inserts a finger into each respective finger-receiving channel 214a-d where each finger is snugly received. The snug receipt is assisted by the resilience of the foam material comprising the body 210 which mean that the relevant walls 216a-b, 217a-c of each finger-receiving channel tend to give as a finger is inserted and naturally adapt to any further finger movement to maintain snug finger-receipt. In a variation, the walls 216a-b, 217a-c of one or more of the finger-receiving channels 214a-d are shaped further to define a part-circular profile mirroring the dashed circular lines of Figure 3.

To assist snug finger-receipt, as may be seen in Figure 2, each finger-receiving channel 214a-d is shaped such that it narrows towards the finger tip end. The width of each channel 214a-d close to the finger tip is in particular, less than would be the width of the average user's finger. Insertion of the user's finger therefore results in give of the foamed material forming the walls 216a-b, 217a-c, which thereby grip the fingers to cause the retention of each user's finger in each finger-receiving channel 214a-d.

To further assist snug finger-receipt, as may be seen in Figure 3, each finger-receiving channel 214a-d is also shaped such that it narrows towards its bottom 215b-c (i.e. each gets narrower deeper into the channel 214a-d). The width of each channel 214a-d close to the finger channel bottom 215b-c (i.e. deepest part of the channel) is in particular, less than would be the width of the average user's finger. Insertion of the user's finger deep into each channel therefore results in give of the foamed material forming the walls 216a-b, 217a-c, which thereby grip the fingers to again cause the retention of each user's finger in each finger-receiving channel 214a-d. As shown by the dotted circles visible in Figure 3, the received position of the user's fingers lies somewhat below (e.g. 6-8mm below) the top surface of the body 204.

To further assist snug finger-receipt, as may be seen in Figure 4, each finger-receiving channel 214a-d is also shaped such that its bottom 215c has a curved profile that mirrors that curved profile of the underside of a user's finger in an outstretched but untensed configuration. Such shaping of each finger-channel bottom 215c ensures maximum contact in use, between the underside of the user's finger and the finger-channel bottom 215c, which again enhances the retention of each user's finger in each finger-receiving channel 214a-d.

In a typical usage operation, the user's fingers grip the divider walls 217a-c of the finger-receiving channels 214a-d, thereby retaining the finger-receiving part of the body 210 adjacent to the fingers. The independent flexing of each of the finger-receiving channels 214a-d contributes to the ability of the glove to both protect the user's palm and fingers without hampering the movement of the user's hand and fingers.

The underside base 204 of the interface 202 has a uniform flat surface (not visible) that is shaped to receive utility attachments or media (e.g. cleaning media).

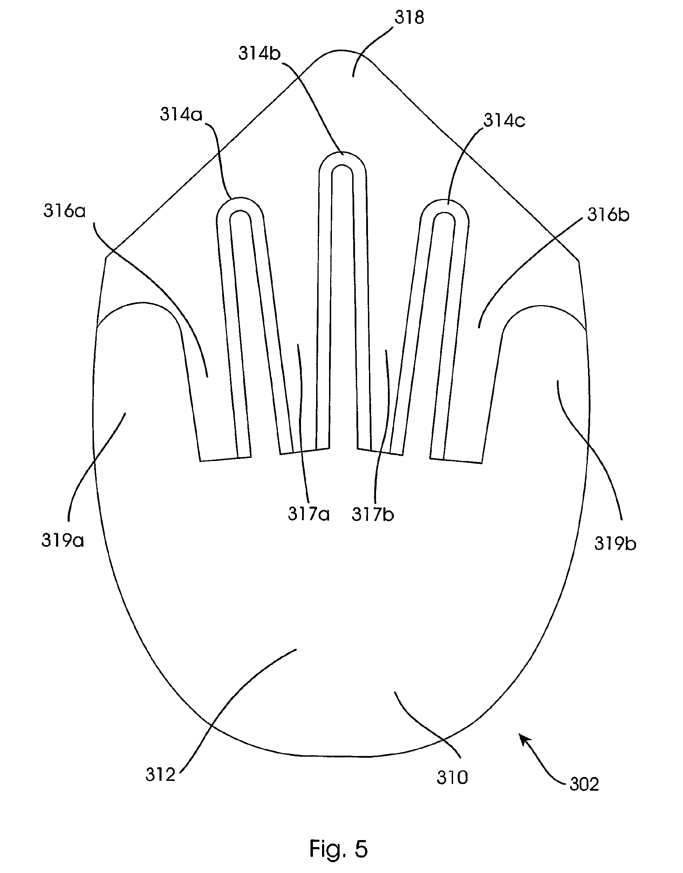

Figure 5 illustrate aspects of a third hand-utility interface herein 302 herein that may be appreciated to be a variation of the second hand-utility interface of Figures 2 to 4. The interface 302 has a block form body 310 comprised of a polymeric foam material (e.g. open cell foam). The body 310 is shaped to receive in use, the palm and fingers of a user and is provided with a palm-receiving portion 312 shaped to receive a user's palm and three elongate U-shaped finger-receiving channels 314a-c arranged for receipt of the index, second and third fingers of a user's hand. The finger-receiving channels 314a-c may be seen to be defined by two outer walls 316a-b and two inner dividing walls 317a-b, which stand proud from the base of the interface 302. It may be noted that the finger-receiving channels 314a-c both fan out (i.e. diverge) and narrow towards the finger tips. This is in part enabled by the fact that the thickness of the inner dividing walls 317a-b increases on proceeding from palm to finger tip end. The tip end 318 of the body 310 has a generally 90° (right angled) profile. This form of profile eases the insertion of the tip end 318 into corners for cleaning. The interface may also be seen to comprise two cut-away portions 319a-b arranged in use, for accommodation, but not retained receipt, of the user's thumb and little finger.

The three finger-channel 314a-c and two cut-away portion 319a-b form of the interface 302 provides ambidextrous utility. That is to say, it is readily receivable by either hand of the user.

In use, the finger channels 314a-c provide the means to retain the interface on the user's hand. The user inserts the index, second and third fingers into each respective finger-receiving channel 314a-c where the respective finger is snugly received. The snug receipt is assisted by the resilience of the foam material comprising the body 310 which mean that the relevant walls 316a-b, 317a-b of each finger-receiving channel tend to give as a finger is inserted and naturally adapt to any further finger movement to maintain snug finger-receipt.

In common with the embodiment shown in Figures 2 and 4 and as described in detail in respect thereof, to assist snug finger-receipt:
(i) each finger-receiving channel 314a-c is shaped such that it narrows towards the finger tip end;
(ii) each finger-receiving channel 314a-c is also shaped such that it narrows towards its bottom; and
(iii) each finger-receiving channel 314a-c is also shaped such that its bottom has a curved profile that mirrors that curved profile of the underside of a user's finger in an outstretched but untensed configuration.

In a typical usage operation, the user's inserted fingers grip the divider walls 317a-b of the finger-receiving channels 314a-c, thereby retaining the finger-receiving part of the body 310 adjacent to the fingers. The independent flexing of each of the finger-receiving channels 314a-c contributes to the ability of the glove to both protect the user's palm and fingers without hampering the movement of the user's hand and fingers.

The underside base of the interface 302 has a uniform flat surface (not visible) that is shaped to receive utility attachments or media (e.g. cleaning media).

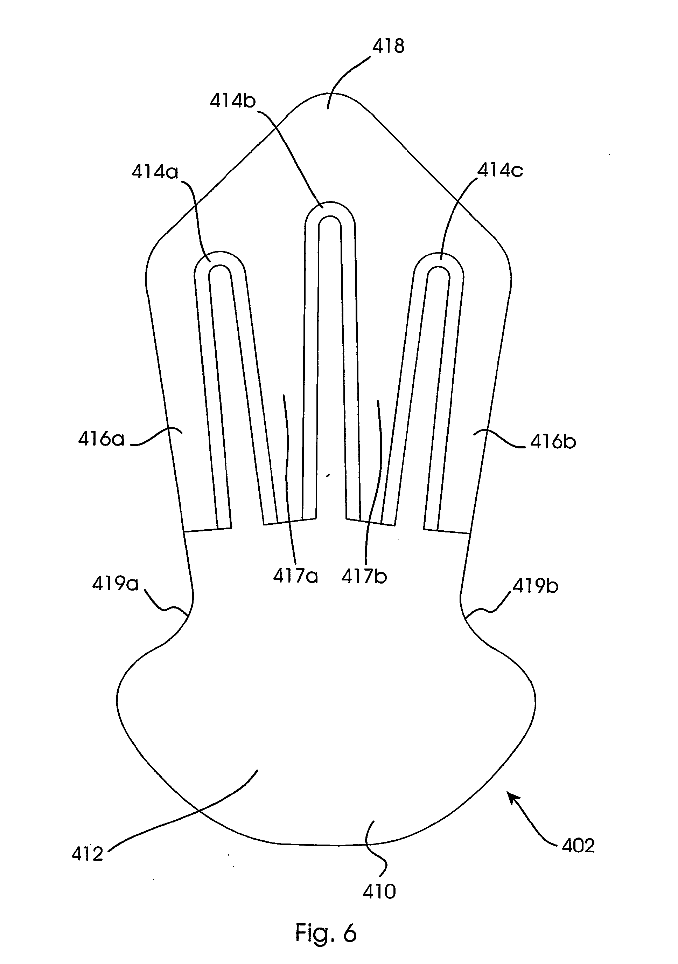

Figure 6 illustrate aspects of a fourth hand-utility interface herein 402 herein that may be appreciated to be another variation of the second hand-utility interface of Figures 2 to 4. The interface 402 has a block form body 410 comprised of a polymeric foam material (e.g. open cell foam). The body 410 is shaped to receive in use, the palm and fingers of a user and is provided with a palm-receiving portion 412 shaped to receive a user's palm and three elongate U-shaped finger-receiving channels 414a-c arranged for receipt of the index, second and third fingers of a user's hand. The finger-receiving channels 414a-c may be seen to be defined by two outer walls 416a-b and two inner dividing walls 417a-b, which stand proud from the base of the interface 402. It may be noted that the finger-receiving channels 414a-c both fan out (i.e. diverge) and narrow towards the finger tips. This is in part enabled by the fact that the thickness of the inner dividing walls 417a-b increases on proceeding from palm to finger tip end. The tip end 418 of the body 410 has a generally 90° (right angled) profile. This form of profile eases the insertion of the tip end 418 into corners for cleaning. The interface may also be seen to comprise two cut-out portions 419a-b arranged in use, for accommodation, but not gripped receipt, of the user's thumb and little finger.

The three finger-channel 414a-c and two cut-out portion 419a-b form of the interface 402 provides ambidextrous utility. That is to say, it is readily receivable by either hand of the user.

In use, the finger channels 414a-c form the means to retain the interface on the user's hand. The user inserts the index, second and third fingers into each respective finger-receiving channel 414a-c where the respective finger is snugly received. The snug receipt is assisted by the resilience of the foam material comprising the body 410 which mean that the relevant walls 416a-b, 417a-b of each finger-receiving channel tend to give as a finger is inserted and naturally adapt to any further finger movement to maintain snug finger-receipt.

In common with the embodiment shown in Figures 2 and 4 and as described in detail in respect thereof, to assist snug finger-receipt:
(i) each finger-receiving channel 414a-c is shaped such that it narrows towards the finger tip end;
(ii) each finger-receiving channel 414a-c is also shaped such that it narrows towards its bottom; and
(iii) each finger-receiving channel 414a-c is also shaped such that its bottom has a curved profile that mirrors that curved profile of the underside of a user's finger in an outstretched but untensed configuration.

In a typical usage operation, the user's inserted fingers grip the divider walls 417a-b of the finger-receiving channels 414a-c, thereby retaining the finger-receiving part of the body 410 adjacent to the fingers. The independent flexing of each of the finger-receiving channels 414a-c contributes to the ability of the interface to both protect the user's palm and fingers without hampering the movement of the user's hand and fingers.

The underside base of the interface 402 has a uniform flat surface (not visible) that is shaped to receive utility attachments or media (e.g. cleaning media).

In aspects, the embodiments shown in Figures 5 and 6 are particularly suitable for use in baby bathing applications, wherein the foamed body comprises a soft, open cell foam body and the ability of the user's index finger and/or thumb to protrude from the body assists with holding / support of the baby that is being bathed.

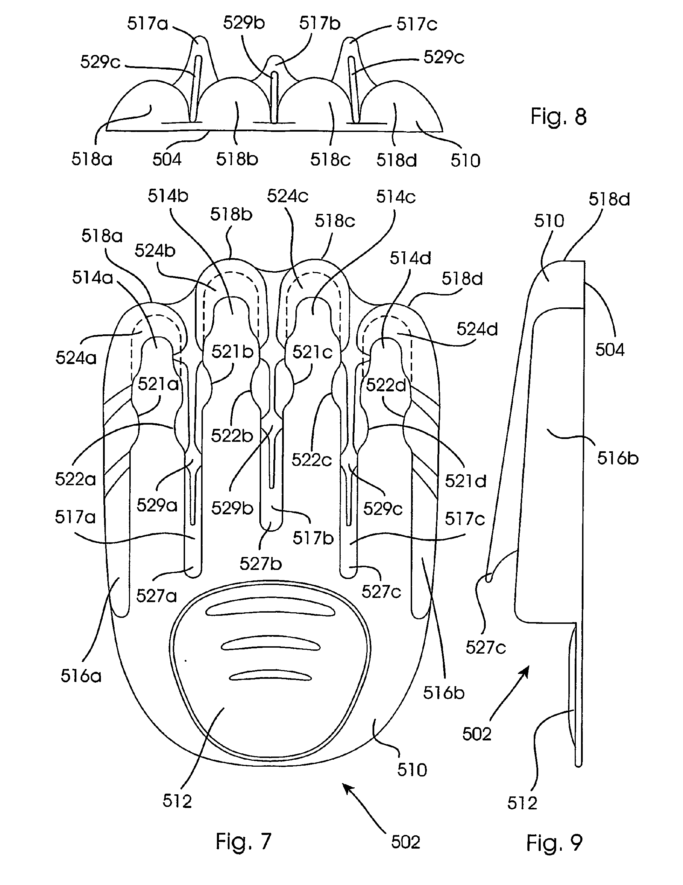

Figures 7 to 9 illustrate aspects of a fifth hand-utility interface herein 502 herein. The interface 502 has a block form body 510 comprised of a polymeric foam material (e.g. closed cell foam). The body 510 is shaped to receive in use, the palm and fingers of a user and is provided with a slightly raised palm-receiving portion 512 shaped to snugly receive the underside a user's palm and four elongate U-shaped finger-receiving channels 514a-d. The finger-receiving channels 514a-d may be seen to be defined by two outer walls 516a-b and three inner dividing walls 517a-c, which stand proud from the base 504 of the interface 502. The finger tip ends 518a-d of the finger-receiving channels 514a-d have a round 'capped' outer profile to provide protection in use, for the user's finger tips.

In use, the finger channels 514a-d provide the means to retain the interface on the user's hand. The user inserts a finger into each respective finger-receiving channel 514a-d where each finger is snugly received. The snug receipt is assisted by the resilience of the foam material comprising the body 510 which mean that the relevant walls 516a-b, 517a-c of each finger-receiving channel tend to give slightly as a finger is inserted and naturally adapt to any further finger movement to maintain snug finger-receipt.

To assist snug finger-receipt, the finger-receiving channels 514a-d, as defined by the two outer walls 516a-b and three inner dividing walls 517a-c, are provided with certain features as now described in detail.

Firstly, overhangs 521a-d; 522a-d are provided to the relevant walls 516a-b; 517a-c as shown, wherein each overhang 521a-d; 552a-d is positioned in use, to contact that part of the upper surface of each user's finger (not shown) that is found beyond the knuckle. It may therefore be appreciated that in use, the overhangs 521a-d; 522a-d act such as to prevent the user's finger's from 'falling out' of the finger-receiving channels 514a-d.

Secondly, the capped finger ends 518a-d of each finger-receiving channel 514a-d defines a finger tip-receiving cavity 524a-d for snug receipt of each relevant finger tip of the user.

Thirdly, each of the inner dividing walls 517a-c may be seen in Figure 9 to have a height that increases slightly from the finger tip end to the palm-receiving end of the body 502, at which point a 'yoke like' projection 527a-c is provided. In use, each yoke-like projection 527a-c acts such as to retain the upper part of the user's hand to the body 502.

It is desirable that the body 502 is able to flex somewhat in use. To enhance flexibility, the three inner dividing walls 517a-c, are provided with a further feature as now described in detail.

Each of the three inner dividing walls 517a-c is provided along its length with a cleft defining an 'open valley' feature 529a-c, which as may be best seen in Figure 8, has a depth extending close to the base 510 of the body 502. Each open valley 529a-c may be seen to extend right up to the finger tip end of the body 502. The presence of these 'open valley' features means that the body 502 can more readily flex to meet the contours of a surface to be cleaned regardless of relationship of that surface to the base 510 of the body 502.

In a typical usage operation, the user's fingers grip the divider walls 517a-c of the finger-receiving channels 514a-d, thereby retaining the finger-receiving part of the body 510 adjacent to the fingers. The independent flexing of each of the finger-receiving channels 514a-d contributes to the ability of the glove to both protect the user's palm and fingers without hampering the movement of the user's hand and fingers.

The underside base 504 of the interface 502 has a uniform flat surface (not visible) that is shaped to receive utility attachments or media (e.g. cleaning media).

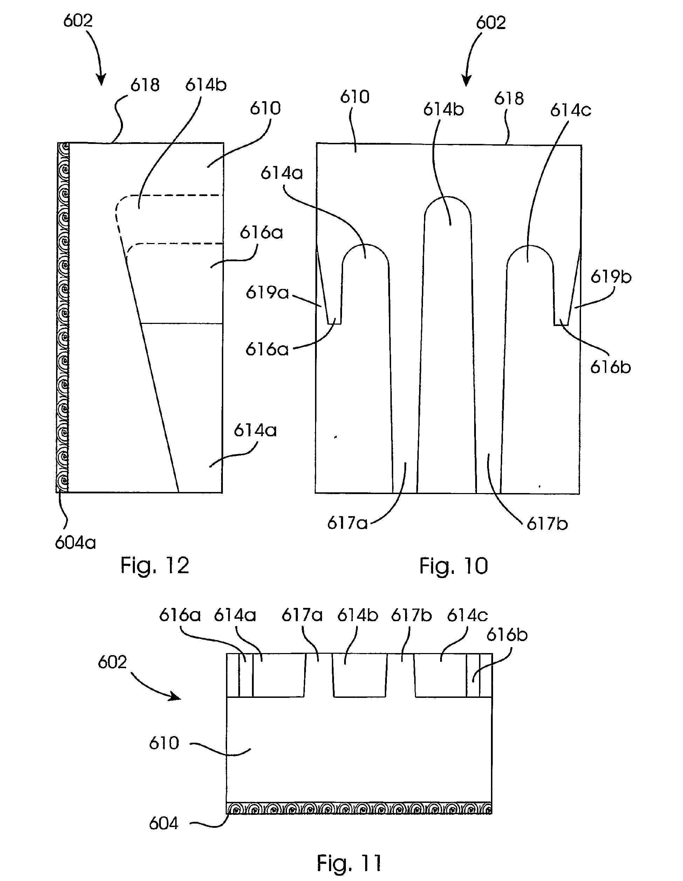

Figures 10 to 12 illustrate aspects of a sixth hand-utility interface herein 602 herein. The interface 602 has a block form body 610 comprised of a polymeric foam material (e.g. open cell foam). The underside of the body is provided with an abrasive pad 604 of the type that is well known for use in kitchen 'scouring' operations.

The body 610 is shaped to receive in use, the fingers of a user (not shown) and is provided with three elongate U-shaped finger-receiving channels 6.14a-c arranged for receipt of the index, second and third fingers of a user's hand. The finger-receiving channels 614a-c may be seen to be defined by two outer walls 616a-b and two inner dividing walls 617a-b, which stand proud from the base of the interface 602. It may be noted that the finger-receiving channels 614a-c narrow slightly towards the finger tips. This is in part enabled by the fact that the thickness of the inner dividing walls 617a-b increases slightly on proceeding to the finger tip end. In one variation, the finger-receiving channels may also be arranged to fan out (i.e. diverge) as for example, shown at Figure 6 in relation to the fourth hand-utility interface 402 herein. The body 610 may also be seen to be provided with two cut-out portions 619a-b arranged in use, for accommodation, but not gripped receipt, of the user's thumb and little finger.

The tip end 618 of the body 610 has a square cut profile. Overall, it may be appreciated the form of the body 610 is generally that of a 'rectangular block', to which cut-away portions have been provided (e.g. by deformation cutting). The three finger-channel 614a-c and two cut-out portion 619a-b form of the interface 602 provides ambidextrous utility. That is to say, it is readily receivable by the fingers of either hand of the user.

In use, the finger channels 614a-c provide the means to retain the interface on the user's hand. The user inserts the index, second and third fingers into each respective finger-receiving channel 614a-c where the respective finger is snugly received. The snug receipt is assisted by the resilience of the foam material comprising the body 610 which mean that the relevant walls 616a-b, 617a-b of each finger-receiving channel tend to give as a finger is inserted and naturally adapt to any further finger movement to maintain snug finger-receipt.

In variations of the embodiment shown in Figures 10 to 12 and to assist snug finger-receipt:
(i) each finger-receiving channel 614a-c may be shaped such that it narrows towards the finger tip end;
(ii) each finger-receiving channel 614a-c may also be shaped such that it narrows towards its bottom; and
(iii) each finger-receiving channel 614a-c may also be shaped such that its bottom has a curved profile that mirrors that curved profile of the underside of a user's finger in an outstretched but untensed configuration.

In a typical usage operation, the user's inserted fingers grip the divider walls 617a-b of the finger-receiving channels 614a-c, thereby retaining the finger-receiving part of the body 610 adjacent to the fingers. The independent flexing of each of the finger-receiving channels 614a-c contributes to the ability of the interface to protect the user's fingers without hampering the movement of the user's hand and fingers.

The sixth hand-utility interface shown in Figures 10 to 12 is particularly suitable for use in hand dishwashing and/or scouring applications, wherein the foamed body 610 comprises a an absorbent open cell foam body and material of the abrasive pad 604 is selected for this purpose.

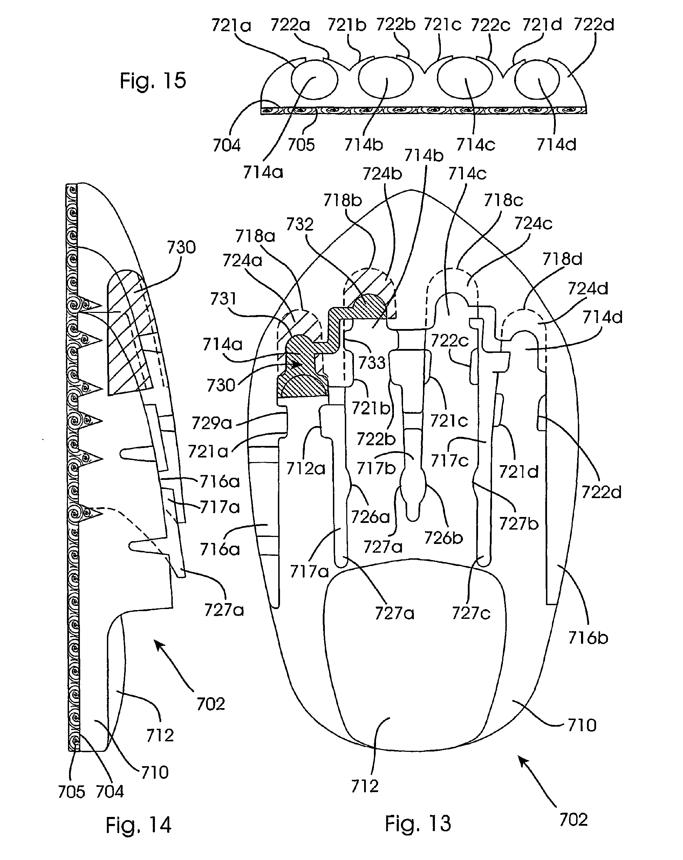

Figures 13 to 15 illustrate aspects of a seventh hand-utility interface herein 702 herein that may be appreciated to be a variation of that shown in Figures 7 to 9. The interface 702 has a block form body 710 comprised of a polymeric foam material (e.g. closed cell foam). The body 710 is shaped to receive in use, the palm and fingers of a user and is provided with a slightly raised palm-receiving portion 712 shaped to snugly receive the underside a user's palm and four elongate U-shaped finger-receiving channels 714a-d. It will be seen that the finger-receiving channels 714a-d are divergent (i.e. that they spread naturally from the palm). In variations of this form the finger-receiving channels 714a-d may be set parallel to one another. The finger-receiving channels 714a-d may be seen to be defined by two outer walls 716a-b and three inner dividing walls 717a-c, which stand proud from the base 704 of the interface 702. An abrasive pad 705 is provided to the base 704 of the interface 702.

In use, the finger channels 714a-d provide means to retain the interface on the user's hand. The user inserts a finger into each respective finger-receiving channel 714a-d where each finger is snugly received. The snug receipt is assisted by the resilience of the foam material comprising the body 710 which mean that the relevant walls 716a-b, 717a-c of each finger-receiving channel tend to give slightly as a finger is inserted and naturally adapt to any further finger movement to maintain snug finger-receipt. The finger-tip ends 718a-d are shaped such as to partially cover the upper parts of the user's fingers.

To assist snug finger-receipt, the finger-receiving channels 714a-d, as defined by the two outer walls 716a-b and three inner dividing walls 717a-c, are provided with certain features as now described in detail.

Firstly, overhangs 721a-d; 722a-d are provided to the relevant walls 716a-b; 717a-c as shown, wherein each overhang 721a-d; 722a-d is positioned in use, to contact that part of the upper surface of each user's finger (not shown) that is found beyond the knuckle. It may therefore be appreciated that in use, the overhangs 721a-d; 722a-d act such as to prevent the user's finger's from 'falling out' of the finger-receiving channels 714a-d.

Secondly, the capped finger end 718a-d of each finger-receiving channel 714a-d defines a finger tip-receiving cavity 724a-d for snug receipt of each relevant finger tip of the user.

Thirdly, a symmetrical "double plug" insert 730 is provided. The insert 730 is removable, and may be transferred from one side of the interface 702 to the other. As shown (left hand location) it allows for the use by a left handed person. With the insert 730 transferred to its right hand location, it renders the form usable by a right-handed person.

The insert 730 has a "double plug" form. That is to say, it has two plug elements separated by a link 733. The two plug elements 732, 733 are connected by the link 733, which sits in a receiving channel provided in the body 710..The insert 730 may be produced in identical soft foamed material to the body 710 or it may be produced in an alternative material.

Where both the body 710 and the insert 730 are produced in soft foamed material this allows for the deformation necessary to insert the insert 730 and locks its link 733 portion into the body. Where these elements are produced in rigid or semi rigid material, it will be necessary to elongate the receiving channel, so that the link 733 may descend closer to the palm and be slid forward in the channel to allow the insert 730 to be driven home.

Fourthly, convex protrusions 726a-b, 727a-b are provided to the walls of the inner two finger-channels 714b-c. These are designed to cooperate with the shape of the user's hand, in that from palm to first finger joint; there is a narrowing in the finger width. The soft convex protrusions 726a-d, 727a-b occupy this widening area and work to retain the body 710 against its possible forward movement off the fingers and hand.

Finally, inner dividing walls 717a and 717c may be seen in Figure 15 to have a height that increases slightly from the finger tip end to the palm-receiving end of the body 702, at which point a 'yoke like' projection 727a, 727c is provided. In use, each yoke-like projection 727a, 727c acts such as to retain the upper part of the user's hand to the body 702 by sitting between the fingers and above the skin at the crutch of the user's fingers. The projections 727a, 727c therefore provide support for the interface 710 preventing it from dropping down under the palm. In variations, projections may be applied to one, two (as shown) or all three of the finger dividing walls 717a-c and may be produced to any suitable extent and form over the back of the hand.

In addition, cut 729a is provided in the top of finger wall 716a designed to ease closing of the hand by reducing the linear strength of the dividing wall in it upper portions. There may be any number of such cuts 729a in one or more of the walls 716a-b, 717a-c as are appropriate for the specific intended purpose of the form.

The base 704 of the block 702 may is provided with cut-away relieves 705. These also contribute to the ease of closing the hand, but in this instance their function is to reduce the bulk of base 704 material to be compressed.

In a typical usage operation, the user's fingers grip the divider walls 717a-c of the finger-receiving channels 714a-d, thereby retaining the finger-receiving part of the body 710 adjacent to the fingers. The independent flexing of each of the finger-receiving channels 714a-d contributes to the ability of the glove to both protect the user's palm and fingers without hampering the movement of the user's hand and fingers.

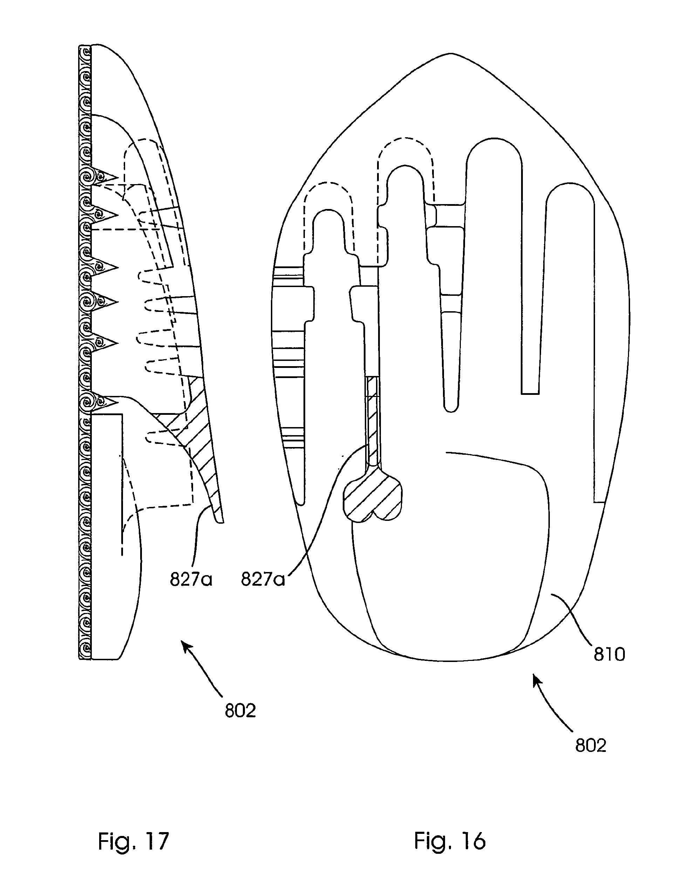

Figures 16 and to 17 illustrate aspects of an eighth hand-utility interface herein 802 herein that is a close variation of that shown in Figures 13 to 15. The principal difference is in the alternative shape and form of the 'yoke like' projection 827a. In the embodiment of Figures 16 and 17, part or all of the 'yoke like' projection 827a is produced in an alternative material, in order to have different characteristics from that of the body 810. For example, a more rigid material might be employed so as to give more strength of support, or and to extend that support further over the back of the hand.

In another aspect, not forming part of the present invention relates to a pack for dispensing media in gel form. The media is suitably a detergent composition in gel form for use in household cleaning purposes.

When using kitchen cloths, "Micro Fibre" cloths, abrasive sponges and other cleaning media to clean household surfaces, those where hygiene is important, it is necessary first to apply cleaning agent to the surface or to the cleaning media.

The cleaning procedure commonly demands five procedural steps: (1) spray the surface to be cleaned; (2) pass the media under warm running water; (3) wring out excess water; (4) form the media into a manageable pad on the hand; and (5) commence cleaning of the surface by applying the media to the surface.

Further, in practice it is very difficult to keep track of how long such cleaning media have been "in service", and so it is difficult to determine the appropriate time to dispose of it or put it through the wash. Often the user will resort to checking how the media smells to assess its state of hygiene. There is a very real likelihood that such media will continue in use in the kitchen once it is actually spreading germs, rather than removing them.

Additionally, disposable dry absorbent paper has the capacity to clear up spills but has no effect on dried on matter. Accordingly, it is necessary to revert to the above media types and their limitations.

This aspect, which is not covered by the present invention, has three purposes: Firstly, to provide the cleaning abilities of such media in one combined form. Secondly, to reduce the number of procedural steps in the above-described surface cleaning process from five to three. The third purpose is to automatically maintain the cleaning media in hygienic condition throughout its service.

According to another aspect also not part of the present invention there is provided a pack for dispensing gel form media comprising
(a) a housing comprising resiliently collapsible walls supporting a rigid rim, said rigid rim defining a well, said well defining a well opening;
(b) seating on the rigid rim, a plate having plural dispensing apertures provided thereto; and
(c) within the well, a container for containing said gel form media,
wherein said plate closes off the well opening such that the gel form media is dispensable from the container by applying pressure to the plate to cause collapse of the walls and thereby force gel form media through said plural dispensing apertures.

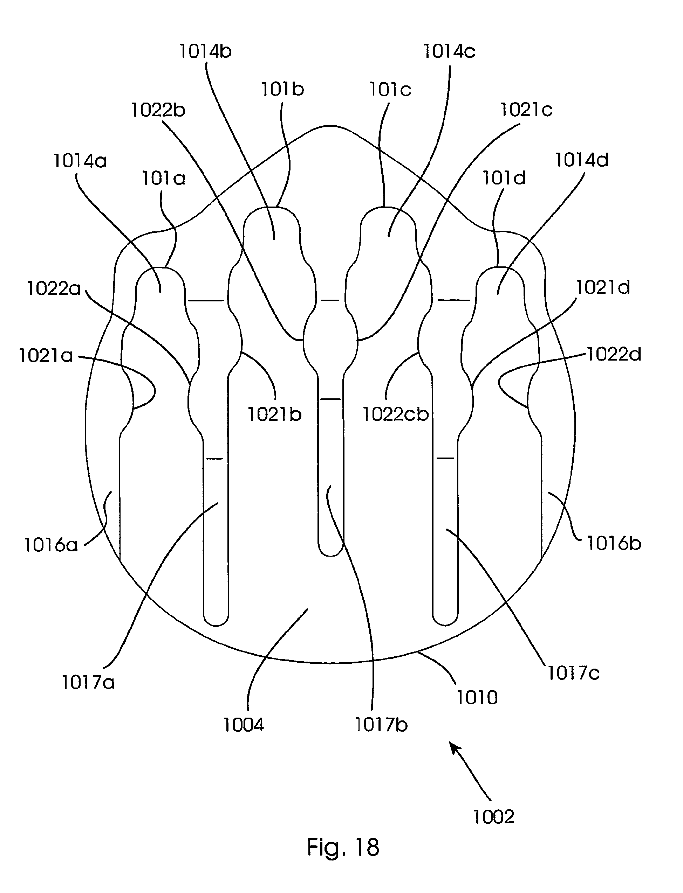

These aspects which do not form part of the present invention will now be described further with reference to the accompanying drawings, in which:-
Figure 18 shows a plan view from above of a first hand-utility interface particularly suitable for use with a gel pack in;

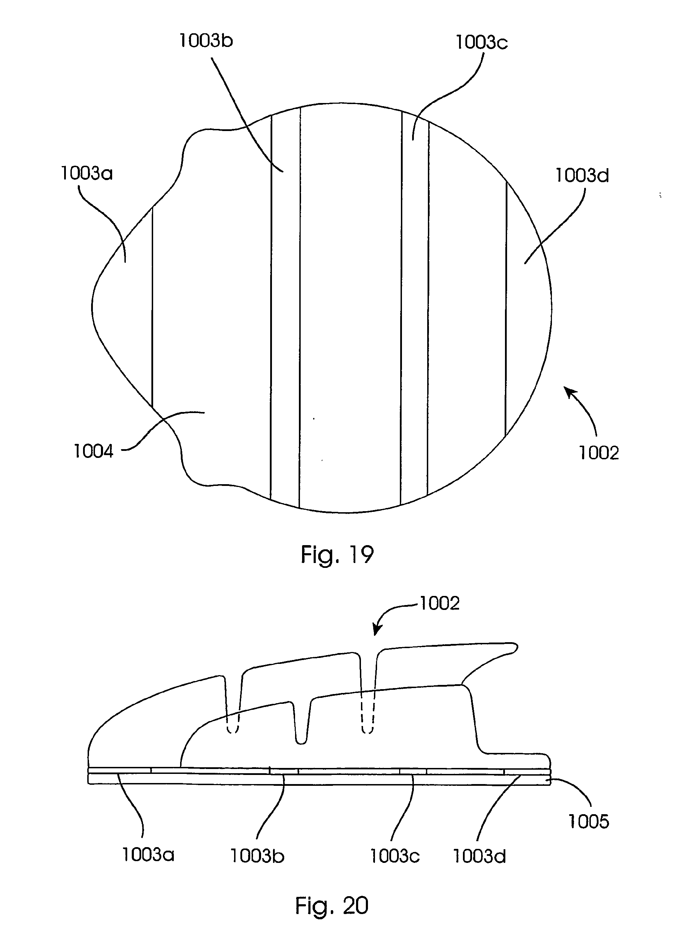

Figure 19 shows an underside plan view of the hand-utility interface of Figure 18;
Figure 20 shows a side view of the hand-utility interface of Figure 18;

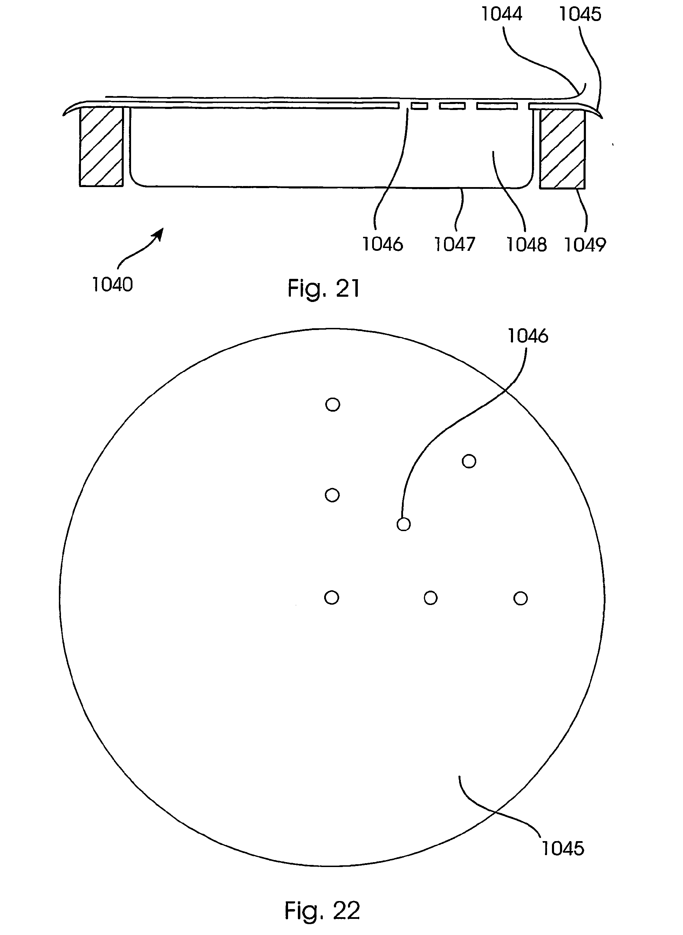

Figure 21 shows a side-sectional view of a gel pack arranged broadly to cooperate with the hand-utility interface of Figures 18-20;
Figure 22 shows a top plan view of the gel pack of Figure 21 with its adhesive seal removed;

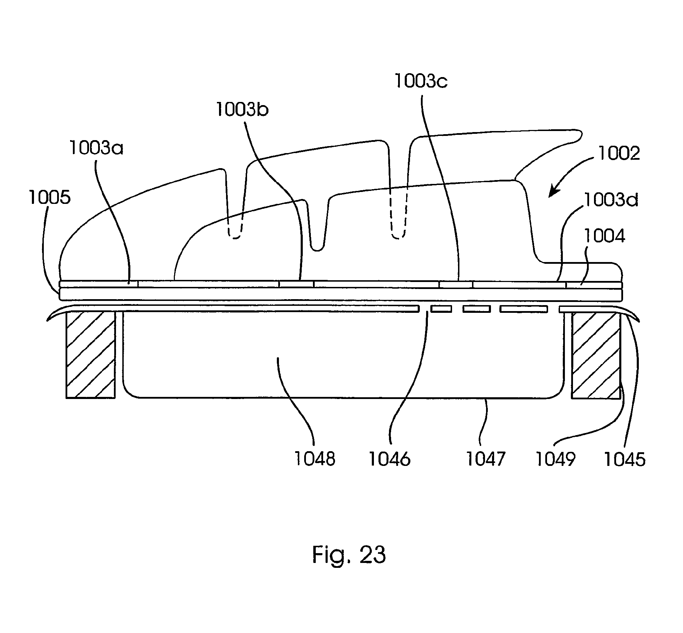

Figure 23 shows a side view of the hand-utility interface of Figures 18-20 at rest on the gel pack of Figures 21 and 22;

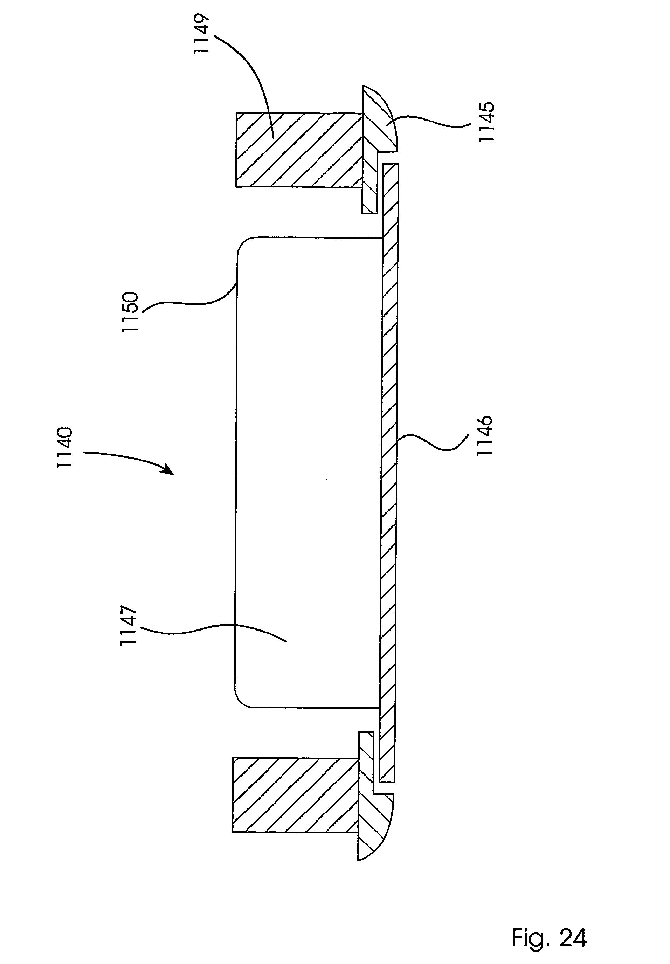

Figure 24 shows a side-sectional view of a second gel pack arranged broadly to cooperate with the hand-utility interface of Figures 18-20;

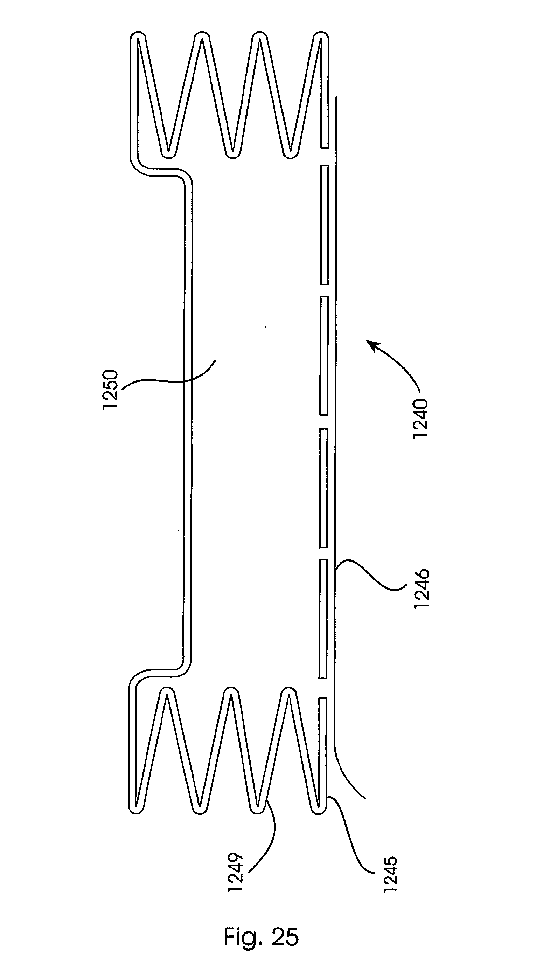

Figure 25 shows a side-sectional view of a third gel pack arranged broadly to cooperate with the hand-utility interface of Figures 18-20;

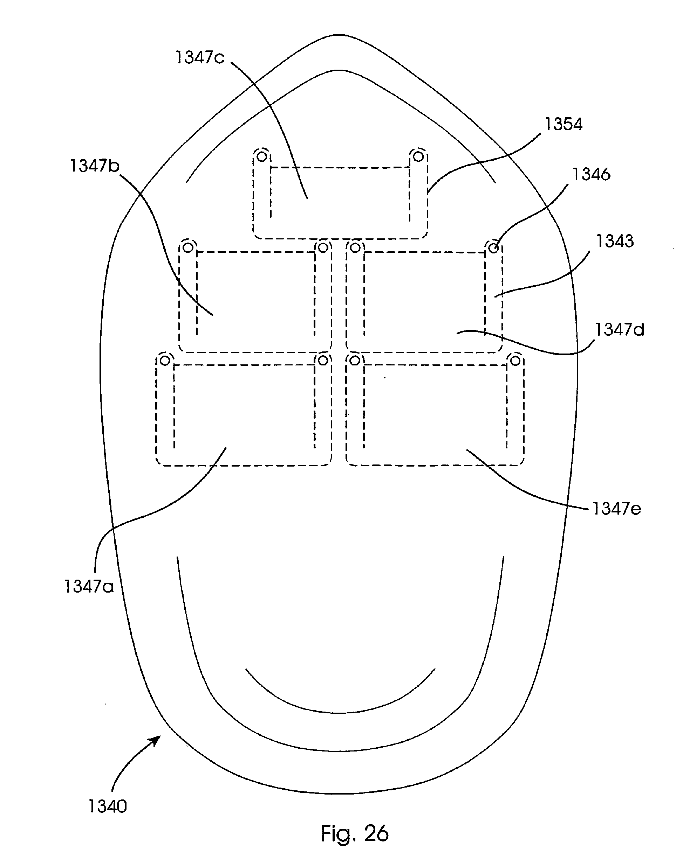

Figure 26 shows a plan view of a fourth gel pack herein;

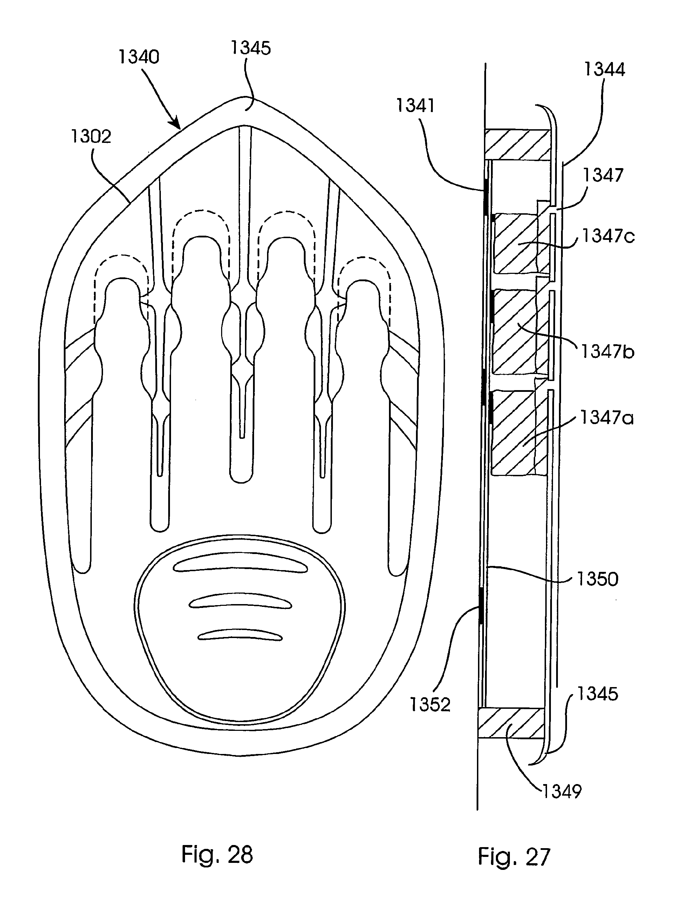

Figure 27 shows a plan view of the fourth gel pack of Figure 26; and
Figure 28 shows a plan view of a hand-utility interface resting superior to the fourth gel pack of Figure 26;

Figures 18 to 20 illustrate aspects of a first hand-utility interface 1002 suitable for use with a gel pack herein. The interface 1002 has a block form body 1010 comprised of a polymeric foam material (e.g. closed cell foam). Preferably, the body 1010 is a waterproof skinned form block that is moulded in supple foam. The body 1010 is shaped to receive in use, the fingers of a user and is provided with four elongate U-shaped finger-receiving channels 1014a-d.

The finger-receiving channels 1014a-d may be seen to be defined by two outer walls 1016a-b and three inner dividing walls 1017a-c, which stand proud from the base 1004 of the interface 1002. The base 1004 of the interface 1002 is provided with parallel 1003a-d lines of Velcro (trade name) like material (i.e. the hook element of a hook and loop attachment system) for releasable attachment of abrasive pad 1005.

In use, the finger channels 1014a-d act such as to retain the interface 1002 on the user's hand. The user inserts a finger into each respective finger-receiving channel 1014a-d where each finger is snugly received. The snug receipt is assisted by the resilience of the foam material comprising the body 1010 which mean that the relevant walls 1016a-b, 1017a-c of each finger-receiving channel tend to give slightly as a finger is inserted and naturally adapt to any further finger movement to maintain snug finger-receipt. Each finger-tip end 1018a-d is shaped such as to partially cover the upper parts of the user's fingers.

To assist snug finger-receipt, the finger-receiving channels 1014a-d, as defined by the two outer walls 1016a-b and three inner dividing walls 1017a-c, are provided with overhangs 1021a-d; 1022a-d, wherein each overhang 1021a-d; 1022a-d is positioned in use, to contact that part of the upper surface of each user's finger (not shown) that is found beyond the knuckle. It may therefore be appreciated that in use, the overhangs 1021a-d; 1022a-d act such as to prevent the user's finger's from 'failing out' of the finger-receiving channels 1014a-d.

In a typical usage operation, the user's fingers grip the divider walls 1017a-c of the finger-receiving channels 1014a-d, thereby retaining the finger-receiving part of the body 1010 adjacent to the fingers. The independent flexing of each of the finger-receiving channels 1014a-d contributes to the ability of the glove to both protect the user's palm and fingers without hampering the movement of the user's hand and fingers.

Figure 21 show a gel pack 1040 herein arranged broadly to cooperate with the hand-utility interface of Figures 18-20. The gel pack 1040 comprises a top plate 1045 provided with a gel sack 1047 comprising detergent in gel form. At its top, the skin of the gel sack 1047 is welded to the underside of the top plate 1045. Arranged circumferential to the plate 1045, there is further provided compressible foam ring 1049 (e.g. of soft skinned foam). The plate 1045 comprises a series of apertures 1046, the purpose of which will become clearer from the later description. Peel off adhesive seal 1044 is provided to seal off those apertures 1046 until the gel pack 1040 is ready for use.

In the gel pack of Figure 21 the top plate 1045 and foam ring 1049 comprise a durable element of the gel pack and the gel sack 1047 (i.e. the container that holds the gel) and adhesive seal 1046 are disposable elements thereof.

In use, the gel sack 1047 suitably contains a combination of cleaning and/or disinfecting gel 1048. The adhesive seal 1044 of the gel pack is first removed. A suitable hand-utility interface 1002 (e.g. as shown in Figures 18-20) is taken and the abrasive pad 1005 (or other underside cleaning media surface of the interface) is moistened under a tap with warm water.

The hand utility interface is then brought into contact with the gel pack 1040 as shown in Figure 23 and pressed down onto the top plate 1045. This pressing down action causes the foam ring 1045 to compress, the gel sack 1047 to give slightly and the gel content 1048 thereof to be forced upwards through the apertures 1046 and onto the pad 1005 on the underside of the hand-utility interface 1002. The greater the downward pressure, the greater the volume of gel 1048 applied to the interface 1002. With the interface 1002 suitably loaded with gel 1048 the cleaning work can commence.

Periodically, the interface 1002 is returned under warm running water to clear the collected matter, compressed by clenching the hand to expel excess water, and again pressed onto the top plate 1045 of the gel pack 1040 to pick up more cleaning agent or gel.

Once the cleaning activity is complete, the interface 1002 is rinsed, excess water is expelled, and it the may be replaced on the top plate 1045 of the gel pack 1040 and again pressed downwards so that the underside 1005 thereof is again charged with cleaning agent and disinfectant. The effect being that the interface 1002 may continue to disinfect itself while it is waiting its next deployment.

In a variation of the gel pack of Figure 21, now shown in Figure 24, top plate 1145 and foam ring 1149 comprise a durable element of the gel pack 1140 that is separable from disposable pack 1147 comprising container 1150 for containing gel and adhesive seal 1146 provided to the container 1150. Commercially, the disposable pack 1147 may be arranged for sale separately as a refill component for the durable part of the pack. Alternatively, a kit of parts comprising the separate durable pack and disposable refill parts may be sold.

In another fully disposable embodiment of the gel pack 1240 shown in Figure 25, top plate 1245 and compressible concertina-form circumferential wall 1249 comprise integral elements of the container 1250 for containing gel. Suitably, the pack is formed by a blow moulding process. Adhesive lid seal 1246 (e.g. a plastic polymer or foil lid) is provided to the container 1250. Use of the pack is by removal of the lid seal 1246 and application of pressure to the top plate to cause resilient collapse of the concertina form wall 1249, thereby causing dispensing of gel through the top plate 1245. Commercially, the disposable pack 1240 may be arranged for sale as a unit that is designed for disposal once the gel contents are exhausted.

Usage of the embodiments of Figures 24 and 25 corresponds to those usage steps described in respect of the embodiment of Figure 21.

Figures 26 and 27 show views of another gel pack 1340, which is designed for wall mounting, so as to avoid taking up limited work top space in, perhaps the bathroom environment. Figure 28 shows a hand-utility interface 1302 resting superior to the gel pack 1340 of Figure 26. The hand-utility interface may for example, take the detailed form of any hand-utility interface described herein such as that of Figures 7-9 or 13-15.

The gel pack 1340 comprises a plate 1345 provided with a plural gel sacks 1347a-e, each comprising detergent in gel form. The gel sacks 1347a-e are formed in a fine non-rigid polyethylene skin. At its top, the skin of each gel sack 1347a-e is welded to the underside of the top plate 1345. Arranged circumferential to the plate 1345, there is further provided compressible foam ring 1349 (e.g. of soft skinned foam). The plate 1345 comprises a series of apertures 1346 arranged to coincide with the location of a gel riser channel 1343 provided to each gel sack 1347a-e. Peel off adhesive seal 1344 is provided to seal off those apertures 1346 until the gel pack is ready for use. Each gel sack 1347a-e is provided with one or more support pads 1341, which serve to prevent the part empty gel sack 1347a-e from drooping so that residual contents fail to reach the access point to the riser channels 1343.

The gel pack 1340 mounts to a supporting back plate 1350, which is provide with a number of double-sided sticky pads 1352 for securing the gel pack unit 1340 to a wall (e.g. in a bathroom or kitchen).

The dotted lines of Figure 26 indicate the pattern of weld lines 1354 which secure the polythene skin of the gel sacks 1347a-e and the riser channels 1343 to the back of surface of the top plate 1345.

This arrangement of Figures 26 to 28 is suitable for dispensing a fluid in addition to a gel. For fluid dispensing it is vital that the release apertures 1343 are set at a slightly higher level than the top line of the reservoir defined by each gel sack 1347a-e. Operation for the vertically mountable format is broadly the same as for that described earlier.

An alternative arrangement to prevent leakage of fluid in a gel pack 1340 arranged for vertical mounting is to provide that the apertures 1346 are configured as valves, which release fluid or high viscosity gel only under pressure. Such arrangements as are used to prevent leakage in infant drinking vessels may be appropriate in this regard. Indeed it may be that the top plate 1345 is produced in such material.

An alternative arrangement for a gel pack is that it is produced as a very much as a cake of soap, but having its own wall attachment means. In this configuration, the hand-utility interface is wiped down the surface of the cake to pick up its cleaning agent load.

This gel pack herein is produced with hygiene and domestic surface care in mind, however it has very much wider application. Its potential application extends to all situations and environments where distribution of gels, fluids or liquids is desirable. Such environments exist in Beauty Care, Patient Care, DIY, Auto Care, Professional Cleaning to name but a few.

Another aspect not covered by the present invention relates to a cleaning tool for use in domestic and professional cleaning applications, particularly for use in cleaning kitchen surfaces.

In domestic and commercial kitchens, and in dining environments, cloths, wet wipes and sponges are used to clean the surfaces. These cleaning media are inefficient in that they demand extra special effort on the part of the user if they are to be persuaded to also pick up and remove crumbs and other small detritus.

The purpose of this tool is to provide a cleaning media and means of application which are configured so that crumb collection and surface cleaning are combined in one convenient unit and the exercise of combined cleaning made faster and the cleaning outcome of a higher standard. A crumb-collecting element is provided as an adaptation or additional feature of the various hand-utility interfaces described hereinbefore.

According to one aspect not covered by the present invention there is provided a tool for cleaning particulate debris from a surface comprising a body for applying a froth-creating cleaning agent to said surface, said body defining a cutaway portion; and provided to said cutaway portion, a framework for accommodating froth arising from the froth-creating agent to provide a froth trap for said particulate debris.

Particulate debris can include crumbs and other particulate detritus that may be found on the surface to be cleaned.

The body may have any suitable form including the form of that of the body of any of the hand-utility interfaces described hereinbefore. Suitably, the body is a foamed block.

The froth-creating cleaning agent is typically a detergent comprising a surfactant that is arranged in use to froth and foam.

The body defines a cutaway portion, which may either be produced by physically cutting away part of the block or be shaped into the block by any other means including as a moulded form. The cutaway portion is provided with a framework for accommodating froth arising in use, from the froth-creating agent to provide a froth trap for said particulate debris.

In use, the body is typically driven across a surface, thereby permitting entrance of the particulate debris into the framework where upon they become trapped by the froth trap. The framework is designed to cooperate with the surface tension / meniscus of the froth such that the framework supports the froth and by so doing prolongs its existence, thereby defining the required froth trap. During or after use, the trapped debris may be cleared from the froth trap by a flush of running water.

In one aspect, the framework has the form of an open spiral of any suitable cross section. In another aspect, the framework comprises loops of any suitable cross section. In a further aspect, the framework comprises an arrangement of stalks / filaments.

First application of the cleaning tool is in kitchen and dining surface cleaning. However application extends to all environments and all hard surfaces where collection and removal of small-scale debris is desired. These circumstances for example, exist in retail, commercial, medical, industrial, and travel environments.

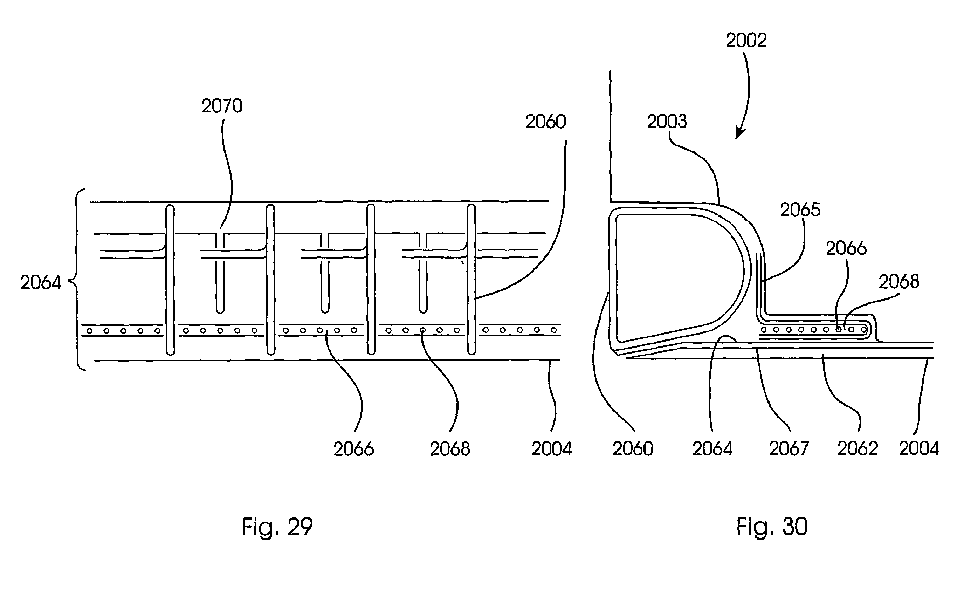

One example not falling within the present invention will now be described further with reference to the accompanying drawings, in which:-
Figure 29 shows a side view of a first crumb-collecting element herein;
Figure 30 shows a side section through the first crumb-collecting element of Figure 29; and

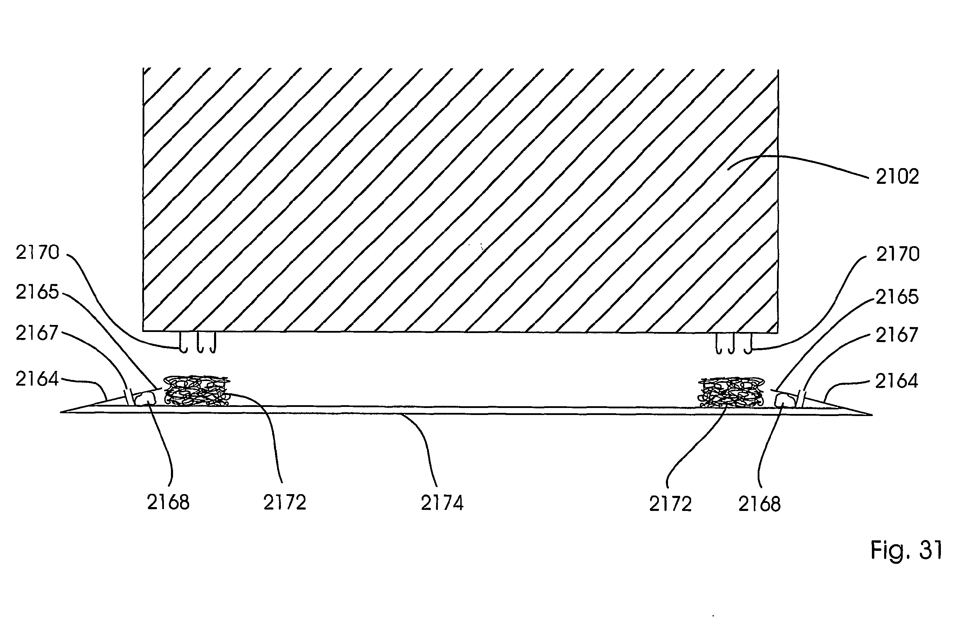

Figure 31 shows a side section through a second crumb-collecting element herein;

Referring now to Figures 29 and 30, which show a first crumb-collecting element that may be arranged as an adaptation of a hand-utility interface herein, for example having the detailed form of that shown in Figure 18.

The base 2004 of the hand-utility interface 2002 is provided with a cutaway section 2003 for accommodating the crumb-collecting element.

The crumb-collecting element comprises wire framework 2060 produced in stainless steel or plastic, or metal with a plastic coating. This wire framework 2060 might be as shown, with vertical elements spaced apart by a horizontal connection, and having a "D" side section, this might alternatively be a round or other side section. A further alternative form envisages a simple spiral or round or other section.

Figure 30 shows that provision of the "D" section in the wire framework 2060 allows the unit 2002 to get right up to a vertical obstruction such as the splash back at the rear of a kitchen work top. However, where such considerations are unimportant, for example in clearing dining tables, a round section framework might be more advantageously employed. In this scenario, the leading edge of the surface cleaning element 2062 might advance so that, in side section, it concludes directly under the centre of the circle described by the wire framework 2060. The advantage being that the foamed area is, in part ahead of the leading edge of the cleaning media, thus making collection more efficient.

The wire framework 2060 may alternatively be created as part of the injection moulding of the hand-utility interface 2002.

The surface cleaning element 2062 may be a permanently fixed element or alternatively it may be a replaceable disposable element. This element 2062 is formed such that it tapers at its perimeter so as to permit "riding-up" of the crumb detritus.

The crumb-collecting element further comprises a peripheral flange 2064 in plastic, which is welded to the surface cleaning element 2062. The vertical wall 2065 of this flange 2064 assists the surface cleaning element 2062 to locate with the interface 2002. At the top of this vertical wall 2065 hooks are provided (not shown), which catch over the horizontal element of the wire framework 2060.

The flange 2064 also has a fold element 2066 that defines a channel 2068. In use, this channel 2068 is filled with or arranged to collect a warm water-soluble foaming agent.

The flange 2064 may have apertures 2067 through to the surface-cleaning element 2062 adjacent to the access to the foaming agent channel 2068. These apertures 2067 assist the foaming by allowing air and moisture, the result of compression of the surface cleaning element 2062 in use, to pass upwards through the flange 2064 layer. These apertures 2067 being formed to work as valves, preventing the foaming agent descending from the channel 2068 into the cleaning element 2062 is desirable, to prevent leaving foam on the surface to be cleaned.

This example envisages a possible alternative leading edge for the flange element 2064, which extends horizontal to the surface being cleared. The advantage of this possibility is improved crumb and/or detritus collection; the disadvantage is that the cleaning element 2062 does not reach the margin of the worktop where a vertical obstacle such as a splash back exists.

Embodiments are envisaged in which, the wire framework 2060 comprises part disposable media. It is also envisaged that further that the wire framework 2060 might be created out of the body matter of the disposable media. In this respect, it is noted that abrasive media is in effect a series of fine filaments that may be formed into suitable shapes (e.g. loops and spirals) thereby saving a separate production and fixing operation.

Any number of vertical cuts 2070 may be produced in the vertical wall 2065 of the flange 2064. This serves to permit flexing of the whole unit 2002 to permit wringing out.

Use of the hand-utility interface adapted with the first crumb-collecting element is now described. Before use, the lower elements 2062, 2064 are made wet under warm running water. The interface unit 2002 is squeezed by clenching in the fist, in order to expel excess water.

This wetting causes release of the first of the foam cells contained in the channel 2068, which expand to fill the void created described by the wire framework 2060.

The wire framework 2060 provides a framework, which supports a foam meniscus, in much the same way, as does the plastic loop of a child's bubble blowing toy. The combination of wire framework 2060 and the meniscus of the foam stretched between it, and the foam's inherent sticky nature, acts like a trap to retain crumbs and such detritus.

With each cleaning task complete, the unit 2002 is rinsed under the tap, where the run of water washes around the wire enclosure 2060 flushing out the crumbs etc. and activates more foam for the unit's continued deployment.

In another use process, the interface is again is wetted under the tap. The wire framework 2060 made to contact a gel dispenser pack (e.g. as described above in relation to Figures 18 to 28) to put detergent gel at the leading edge thereof. The user presses the unit 2002 down a few times (e.g. on the work top) such that the squeezed air + gel + moisture generates froth/bubbles in the wire framework 2060. The unit is now ready for use.

An alternative arrangement where the nature of the foaming agent is such that it does not require the support afforded by the wire framework 2060 could eliminate the need for that wire framework 2060. However secondary beneficial effects of the wire framework, such as its physical assistance in preventing escape of the debris would be lost.

Referring now to Figure 31, which shows a second crumb-collecting element herein comprising hand-utility interface 2102 in the form of a soft waterproof skinned foam block.

The hand-utility interface 2102 is provided at its base with Velcro (trade name) hooks 2170 arranged for interaction with corresponding Velcro (trade name) loops 2172 provided to a wet wipe 2174, thereby attaching the wet wipe 2174 to the hand-utility interface 2102.

A semi-rigid flange 2164 (e.g. ring form) is fixed to the periphery of the wipe 2174. The flange 2164 rises up from its periphery to its inside edge 2165 to form a slight incline. The flange 2164 is also provided with apertures 2167 therein that can allow foam from a foaming agent to rise there through and create a sticky deposit on the upper surface of the flange 2164. Crush-releasable foam-releasing cells 2168 are provided adjacent to the apertures 2167 as the source of foam.

In use, the user applies downward pressure to the hand-utility interface 2102 with the wipe 2174 held adjacent to a flat surface. The inside edge 2165 of the peripheral flange 2164 of the wipe 2174 is thereby depressed such as to apply compressive force to the foam-releasing cells 2168. The released foam is in turn, squeezed up through the apertures 2167 such that it sits as a sticky foam deposit on the upper surface of the flange 2164. As the hand-utility interface 2102 and flanged wet wipe 2174 is then passed over a surface for cleaning any crumbs or other such detritus on such surface come into contact with the flange 2164 and adhere to the sticky foam deposit on the upper surface of thereof. In essence, the sticky nature of the foam deposit on the flange 2164 acts like a trap to retain crumbs and such detritus.

Once the cleaning operation is completed the wet wipe 2174 and its peripheral flange 2164 is discarded and a fresh wipe may be applied for use in subsequent cleaning operations.

The elements shown in Figures 29 and 30 may surround the whole of the perimeter of the application means, or they may be present in certain areas only.

The hand-utility interface may be of any outline shape. It is advantageous to have at least one protruding angular element for getting into corners.

The spacing between the vertical, or partially inclined, element of the wire framework 2060 of Figures 29 and 30 may be set differently from one product offering to another.

In one product offering, the spacing between the vertical, or partially inclined, element of the wire framework may be varied in different parts of the product, so to deal with differing scales of debris.

The cleaning element 2062 may comprise any of the commonly used media, but in particular, Micro Fibre cloth, abrasives, absorbent sponges and their like. Of particular benefit will be cleaning elements 2062 that present a combination of media in order that some scouring may happen together with some absorption, together with some polishing. In such instance, the cleaning element may comprise bands of different media in stripes of any pattern, or segments radiating form some centre point or line, or concentric circles or any other configuration of assembly. As a further possibility the varying media may be provided in patches of any shape and size. As a further possibility the varying media may be created by provision of single alternating filaments of each different media side by side. As a still further possibility, the media might be loaded / peppered with time-release bright coloured disinfectant loaded cells. The cells would start to release their disinfectant as soon as the media is first made wet, and continues to release until a preset time. All colour vanishes when the cells are exhausted of disinfectant.

Possible alternatives to the wire framework 2060 do exist. Viewed in the front elevation the unit may present "windows" or loops of any convenient size and outline. In this approach it is most advantageous that the windows are created as part of the flange 2064 and in such a way as no bottom part of the "window frame" exists, as this would create an obstacle to the collection of debris. Such windows may need to take account of the interface's 2002 need to be crushed in the hand for wringing out, and so be configured in a manner that permits such action.

Apparatus incorporating the crumb-collecting element described above may be designed to co-operate with, or to form a part of, floor washing means which provides that the general detritus [which has traditionally been collected by sweeping and use of the dust pan & brush prior to washing the floor] can now be lifted and removed by the single action of washing the floor.

The apparatus herein provides a trap along the leading edge of the floor washing medium, a trap which detritus is forced to enter by the forward movement of the medium. The trap forms a narrow strip, which is pressed against the floor by the application medium.

The trap is a narrow gauge strip of plastic or such like, having multiple fine stalks arranged in stepped rows so that the stalks of alternate rows, when viewed in front elevation, are placed directly between those of the adjacent rows. These stalks may be resilient or flexible, but preferably flexible.

Suitably, the free ends of these stalks are formed (e.g. with end feet) to present one or other of the following:-
- "plates": Flat circular (or any other shape) plates of absolute minimum thickness with the stalk rising centrally from it.
- "hooks": Not unlike Velcro (trade name)
- "beads": Round or other bulbous forms
but preferably circular plates of a diameter which leaves a small gap between each plate and those adjacent to it.

When wetted by the floor cleaning solution, the surface tension of that liquid forming on and around the stalks/plates, will cause small particles of dirt to become trapped in such a way that a flush of water will clear the matter.

The above "trap" system might work in cooperation with the following media types.

Roller squeeze out sponge media and apparatus: [e.g. a roller squeezable mop of the type sold by the Vileda company]

Hinged squeeze out sponge media and apparatus: [e.g. a hinged squeezable mop of the type sold by the Addis company]

In an alternative arrangement, the apparatus herein is designed for use with disposable wet wipe pads in association with deploying apparatus which distributes cleaning fluid: [e.g. for use with that cleaning apparatus sold under the trade name Dettol Easy Mop]

In this application the performance can be improved by the incorporation of foam. The goal here is that the space within the "forest" of stalks (and above the upper surface of the plates) is filled with a sticky foam.

The proposal here is that a dry deposit should be incorporated attaching to one or another surface of the forest, and which is activated by contact with the cleaning fluid (the catalyst) to expand and fill the interior space between the stalks.

It is desirable that the foam's volume is controlled so that fully expanded it does not spread beyond the interior confines of the assembly of stalks.

The effect of the combination of foam and assembly of stalks is to provide a very efficient magnet for all manner of detritus.

The scale of debris accommodated within the assembly of stalks can be increased by spacing the stalks and their end feet (e.g. plates) out and altering the foam characteristics so that it has the capacity to maintain itself and, in effect, bridge the gaps relying only on its own nature.

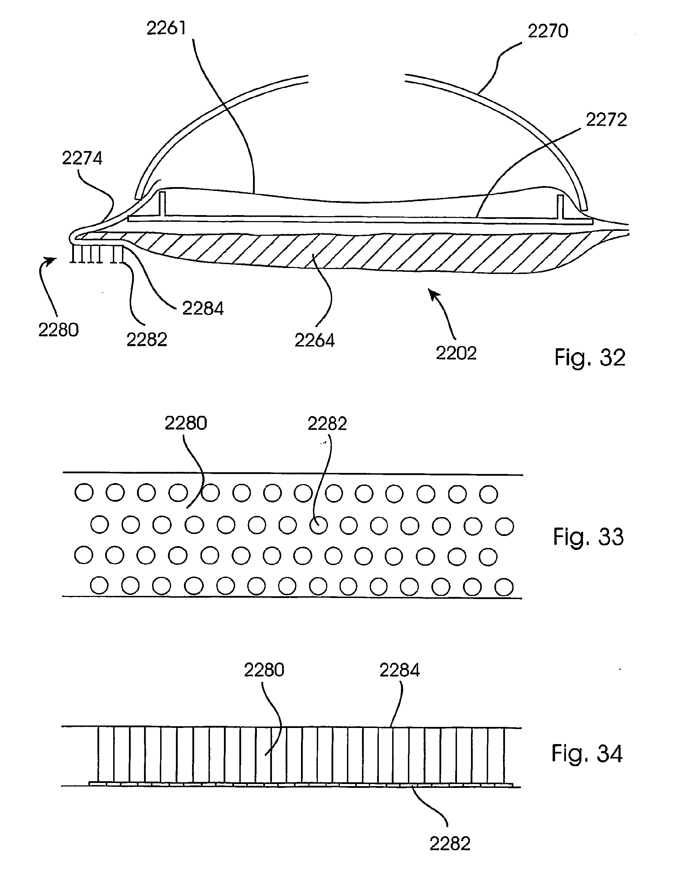

One example not falling within the terms of the present invention will now be described further with reference to the accompanying drawings, in which:-
Figure 32 shows an end elevation section through the head of a floor mop apparatus herein;
Figure 33 is an underside plan view of part of the crumb collecting elements of the apparatus of Figure 32;
Figure 33 is a side view of the part of the crumb collecting elements of Figure 33;

Referring now to the Figures, there is shown at Figure 31 the head of a floor mop apparatus 2202 (e.g. of the type sold under the trade name Dettol Easy Mop) adapted to provide enhanced collecting or crumbs or other detritus.

The top part 2270 of the floor mop apparatus 2202 is typically provided with a cleaning fluid bottle (not shown). The base part 2272 of the apparatus is in hinged attachment with the top part 2270 and configured to allow that a tubular section 2261 of a disposable cleaning pad 2262 can be slipped over the base part 2272, which is then shut and snap-locked in the closed position.

The leading edge of the cleaning pad 2264 is provided a wrap around plastic strip (or flange) 2274. The upper portion of this plastic strip 2274 is clamped by closure of the upper 2270 and lower body 2272 parts to provide downward pressure on the leading edge of the cleaning pad 2262.

To provide a crumb-collector, flange 2274 is provided with an arrangement of stalks 2280 at the under surface 2268 thereof. It will be noted that the end of each stalk 2280 defines a plate 2282, which in use, presents a generally horizontal end surface to the floor to be cleaned.

Figures 33 and 34 show more details of the arrangement of stalks 2280 that define a trap strip 2284, and shows the preferred arrangement of the stalk plates 2282 defined at the end of each stalk 2280.

As an alternative to the foam, loose individual long fibres may be employed running the length of the strip 2284 and intertwined with the stalks 2280. This will serve to augment the trap.

In a further alternative application, the crumb-collecting element described herein may be applied to a "simple sheet" Floor Wet Wipe: [e.g. of the type sold under the trade name Swiffer by The Procter and Gamble Company]. In this instance, the Wet Wipe is wrapped around and fixed by one means or another to suitable pad with a long handle.

Here, the trap strip should form a part of the wipe, better still, two trap strips should be fitted, one to sit at either long side of the pad/handle arrangement.

The reverse of the strips might be configured to provide plastic/nylon spikes, which serve as the means of attachment of the wipe to the pad, by snap locking into reception apertures.

The action of this snap locking could be made to puncture a foam sack contained within each trap strip and so release the foam into the forest.

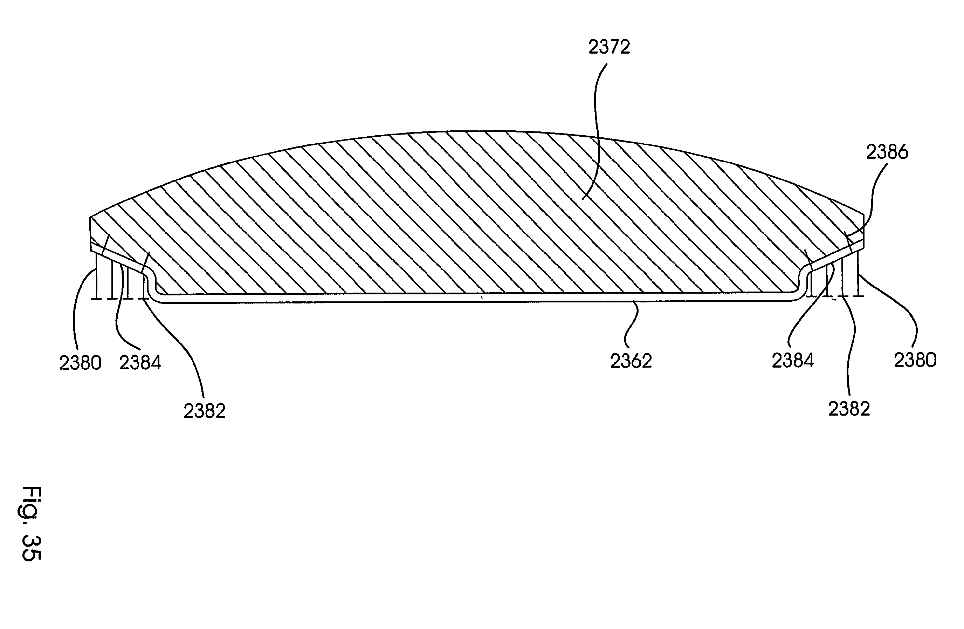

Figure 35 shows an end section of a suitable wet wipe arrangement comprising a body 2372, to which a disposable wipe sheet 2362 is provided. Trap strip 2384 is arranged lie circumferential to the wipe sheet 2362, and is held in place by a spike location and fixing snap lock 2386 for attachment of the wipe 2362 and trap strip 2384 to the pad body 2372. Associated with the trap strip 2384 is an assembly of stalks 23 with end plates 2382.

Figure 34 also shows the concept of graduating the length of the stalks 2380 in the trap 2384, longer at the leading edge and shorter at the inside edge. The benefit of this alternative arrangement is that larger particles can be caught and trapped.

## Claims

1. A hand-utility interface (102; 202; 302; 402; 502; 602; 702; 802) for use in protecting a user's finger tips during utility tasks comprising a foamed block body (110; 210; 310; 410; 510; 610; 710; 810) having defined therein a plurality of finger-receiving channels (114a-d; 214a-d; 314a-c; 414a-c; 514a-d; 614a-c; 714a-d) for receiving the fingers of said user's hand, **characterized by** each of said channels having finger tip ends (118a-d; 518a-d; 718a-d); wherein said foamed block body comprises at least two finger-receiving channels of equal length for receipt of the second and third fingers of the user's hand respectively; and wherein said finger-receiving channels diverge towards said finger tip ends.

2. A hand-utility interface as claimed in any preceding claim wherein said at least two finger-receiving channels are identical in shape.

3. A hand-utility interface as claimed in any preceding claim wherein said at least two finger-receiving channels are identical in length and width.

4. A hand-utility interface as claimed in any preceding claim wherein each finger-receiving channel narrows progressively along its length.

5. A hand-utility interface as claimed in claim 4 wherein the depth of each finger-receiving channel reduces progressively along its length.

6. A hand-utility interface as claimed in claim 4 or 5 wherein the width of each finger-receiving channel reduces progressively along its length.

7. A hand-utility interface as claimed in claim 4, 5 or 6 wherein the cross-section of each finger-receiving channel reduces progressively along its length.

8. A hand-utility interface as claimed in any preceding claim wherein each finger-receiving channel has a curving under profile.

9. A hand-utility interface as claimed in any preceding claim wherein the foamed block body is provided with a first portion (319a/b; 419a/b; 619a/b) arranged in use to receive the user's thumb.

10. A hand-utility interface as claimed in any preceding claim wherein the foamed block body is provided with a second portion (319a/b; 419a/b; 619a/b) arranged in use to receive the user's little finger.

11. A hand-utility interface as claimed in any of claims 1 to 9 wherein the foamed block body has three finger-receiving channels for receipt of the user's index, second and third fingers respectively, but no finger-receiving channel for receipt of the user's little finger.

12. A hand-utility interface as claimed in any of claims 1 to 10 wherein the foamed block body is provided with v-shaped channels for added flexibility.

13. A hand-utility interface as claimed in any preceding claim wherein the finger-receiving channels are defined by continuous walls (116a-b, 117a-c; 216a-b, 217a-c; 316a-b, 317a-b; 416a-b, 417a-b; 516a-b, 517a-c; 616a-b, 617a-b) of the foamed block body.

14. A hand-utility interface as claimed in any of claims 1 to 12 wherein the finger-receiving channels are defined by intermittent walls (716a-b, 717a-c) of the foamed block body.

15. A hand-utility interface as claimed in any preceding claim wherein the foamed block body is provided with a palm-receiving portion (112; 212; 312; 412; 512; 712) shaped to receive the user's palm.

16. A hand-utility interface as claimed in claim 15 wherein the palm receiving portion has a domed profile.

17. A hand-utility interface as claimed in any preceding claim wherein one or more of the finger-receiving channels is provided with a partial over finger tip cover (518a-d; 718a-d).

18. A hand-utility interface as claimed in any preceding claim wherein one or more of the finger-receiving channels is provided with overhanging elements (521a-d, 522a-d; 721a-d, 722a-d).

19. A hand-utility interface as claimed in any preceding claim wherein the finger-receiving channels are defined in part by inner dividing walls having a height that increases from the finger tip end to the palm-receiving end of the body to define a yoked projection (527a-c; 727a,c), which acts such as to retain the upper part of the user's hand to the body.

20. A hand-utility interface as claimed in any of claims 1 to 16 made by a deformation cutting process.

21. A hand-utility interface as claimed in any of claims 15 to 19 made by an injection or reaction moulding process.

## Patentansprüche

1. Hand/Gegenstands- bzw. Gebrauchs-Zwischeneinrichtung (102; 202; 302; 402; 502; 602; 702; 802) für die Verwendung zum Schutz der Fingerspitzen eines Anwenders bei Mehrzweckaufgaben, mit einem Schaumblockkörper (110; 210; 310; 410; 510; 610; 710; 810), in dem mehrere Fingeraufnahmekanäle (114a-d; 214a-d; 314a-c; 414a-c; 514a-d; 614a-c; 714a-d) definiert sind, um die Finger der Hand des Anwenders aufzunehmen, **dadurch gekennzeichnet, dass** jeder der Kanäle Fingerspitzenenden (118a-d; 518a-d; 718a-d) besitzt, wobei der Schaumblockkörper wenigstens zwei Fingeraufnahmekanäle mit gleicher Länge für die Aufnahme des zweiten bzw. des dritten Fingers der Hand des Anwenders aufweist, und wobei die Fingeraufnahmekanäle zu den Fingerspitzenenden auseinander laufen.

2. Hand/Gegenstands-Zwischeneinrichtung nach einem vorhergehenden Anspruch, wobei die wenigstens zwei Fingeraufnahmekanäle die gleiche Form haben.

3. Hand/Gegenstands-Zwischeneinrichtung nach einem vorhergehenden Anspruch, wobei die wenigstens zwei Fingeraufnahmekanäle die gleiche Länge und die gleiche Breite haben.

4. Hand/Gegenstands-Zwischeneinrichtung nach einem vorhergehenden Anspruch, wobei jeder Fingeraufnahmekanal auf seiner Länge allmählich schmäler wird.

5. Hand/Gegenstands-Zwischeneinrichtung nach Anspruch 4, wobei die Tiefe jedes Fingeraufnahmekanals auf seiner Länge allmählich abnimmt.

6. Hand/Gegenstands-Zwischeneinrichtung nach Anspruch 4 oder 5, wobei die Breite jedes Fingeraufnahmekanals auf seiner Länge allmählich abnimmt.

7. Hand/Gegenstands-Zwischeneinrichtung nach Anspruch 4, 5 oder 6, wobei die Querschnittsfläche jedes Fingeraufnahmekanals auf seiner Länge allmählich abnimmt.

8. Hand/Gegenstands-Zwischeneinrichtung nach einem vorhergehenden Anspruch, wobei jeder Fingeraufnahmekanal ein gekrümmtes Unterprofil hat.

9. Hand/Gegenstands-Zwischeneinrichtung nach einem vorhergehenden Anspruch, wobei der Schaumblockkörper mit einem ersten Abschnitt (319a/b; 419a/b; 619a/b) versehen ist, der im Gebrauch dazu ausgelegt ist, den Daumen des Anwenders aufzunehmen.

10. Hand/Gegenstands-Zwischeneinrichtung nach einem vorhergehenden Anspruch, wobei der Schaumblockkörper mit einem zweiten Abschnitt (319a/b; 419a/b; 619a/b) versehen ist, der im Gebrauch dazu ausgelegt ist, den kleinen Finger des Anwenders aufzunehmen.

11. Hand/Gegenstands-Zwischeneinrichtung nach einem der Ansprüche 1 bis 9, wobei der Schaumblockkörper drei Fingeraufnahmekanäle für die Aufnahme des Zeigefingers, des Mittelfingers bzw. des Ringfingers des Anwenders, jedoch keinen Fingeraufnahmekanal für die Aufnahme des kleinen Fingers des Anwenders besitzt.

12. Hand/Gegenstands-Zwischeneinrichtung nach einem der Ansprüche 1 bis 10, wobei der Schaumblockkörper mit v-förmigen Kanälen für eine zusätzliche Flexibilität versehen ist.

13. Hand/Gegenstands-Zwischeneinrichtung nach einem vorhergehenden Anspruch, wobei die Fingeraufnahmekanäle durch ununterbrochene Wände (116a-b, 117a-c; 216a-b, 217a-c; 316a-b, 317a-b; 416a-b, 417a-b; 516a-b, 517a-c; 616a-b, 617a-b) des Schaumblockkörpers definiert sind.

14. Hand/Gegenstands-Zwischeneinrichtung nach einem der Ansprüche 1 bis 12, wobei die Fingeraufnahmekanäle durch unterbrochene Wände (716a-b, 717a-c) des Schaumblockkörpers definiert sind.

15. Hand/Gegenstands-Zwischeneinrichtung nach einem vorhergehenden Anspruch, wobei der Schaumblockkörper mit einem Handflächenaufnahmeabschnitt (112; 212; 312; 412; 512; 712) versehen ist, um die Handfläche des Anwenders aufzunehmen.

16. Hand/Gegenstands-Zwischeneinrichtung nach Anspruch 15, wobei der Handflächenaufnahmeabschnitt ein gewölbtes Profil besitzt.

17. Hand/Gegenstands-Zwischeneinrichtung nach einem vorhergehenden Anspruch, wobei einer oder mehrere der Fingeraufnahmekanäle mit einer die Oberseite der Fingerspitze teilweise abdeckenden Abdeckung (518a-d; 718a-d) versehen ist.

18. Hand/Gegenstands-Schnittstelle nach einem vorhergehenden Anspruch, wobei einer oder mehrere der Fingeraufnahmekanäle mit überhängenden Elementen (521a-d, 522a-d; 721a-d, 722a-d) versehen ist.

19. Hand/Gegenstands-Zwischeneinrichtung nach einem vorhergehenden Anspruch, wobei die Fingeraufnahmekanäle teilweise durch innere Unterteilungswände definiert sind, die eine Höhe besitzen, die vom Fingerspitzenende zum Handflächenaufnahmeende des Körpers zunimmt, um einen Jochvorsprung (527a-c; 727a, c) zu definieren, der in der Weise wirkt, dass er den oberen Teil der Hand des Anwenders am Körper hält.

20. Hand/Gegenstands-Zwischeneinrichtung nach einem der Ansprüche 1 bis 16, die durch einen Verformungsschneidprozess hergestellt ist.

21. Hand/Gegenstands-Zwischeneinrichtung nach einem der Ansprüche 15 bis 19, der durch einen Spritzguss- oder Reaktionsgießprozess hergestellt ist.

## Revendications

1. Interface utilitaire pour la main (102 ; 202 ; 302 ; 402 ; 502 ; 602 ; 702 ; 802) à utiliser pour protéger les bouts des doigts d'un utilisateur au cours de tâches utilitaires, comportant un corps de bloc en mousse (110 ; 210 ; 310 ; 410 ; 510 ; 610 ; 710 ; 810) ayant, définie à l'intérieur de celui-ci, une pluralité de canaux de réception de doigts (114a à 114d ; 214a à 214d ; 314a à 314c ; 414a à 414c ; 514a à 514d ; 614a à 614c ; 714a à 714d) pour recevoir les doigts de la main dudit utilisateur, **caractérisée en ce que** chacun desdits canaux a des extrémités de bouts de doigts (118a à 118d ; 518a à 518d ; 718a à 718d) ; dans laquelle ledit corps de bloc en mousse comporte au moins deux canaux de réception de doigts d'égale longueur pour la réception des deuxième et troisième doigts de la main de l'utilisateur respectivement ; et dans laquelle lesdits canaux de réception de doigts divergent vers lesdites extrémités de bouts de doigts.

2. Interface utilitaire pour la main telle que revendiquée dans l'une quelconque des revendications précédentes, dans laquelle lesdits au moins deux canaux de réception de doigts sont de forme identique.

3. Interface utilitaire pour la main telle que revendiquée dans l'une quelconque des revendications précédentes, dans laquelle lesdits au moins deux canaux de réception de doigts sont de longueur et de largeur identiques.

4. Interface utilitaire pour la main telle que revendiquée dans l'une quelconque des revendications précédentes, dans laquelle chaque canal de réception de doigt se rétrécit progressivement le long de sa longueur.

5. Interface utilitaire pour la main telle que revendiquée dans la revendication 4, dans laquelle la profondeur de chaque canal de réception de doigt réduit progressivement le long de sa longueur.

6. Interface utilitaire pour la main telle que revendiquée dans la revendication 4 ou 5, dans laquelle la largeur de chaque canal de réception de doigt diminue progressivement le long de sa longueur.

7. Interface utilitaire pour la main telle que revendiquée dans la revendication 4, 5 ou 6, dans laquelle la section transversale de chaque canal de réception de doigt diminue progressivement le long de sa longueur.

8. Interface utilitaire pour la main telle que revendiquée dans l'une quelconque des revendications précédentes, dans laquelle chaque canal de réception de doigt a un profil inférieur courbe.

9. Interface utilitaire pour la main telle que revendiquée dans l'une quelconque des revendications précédentes, dans laquelle le corps de bloc en mousse est muni d'une première partie (319a/b ; 419a/b ; 619a/b) conçue pour recevoir, en utilisation, le pouce de l'utilisateur.

10. Interface utilitaire pour la main telle que revendiquée dans l'une quelconque des revendications précédentes, dans laquelle le corps de bloc en mousse est muni d'une seconde partie (319a/b ; 419a/b ; 619a/b) conçue pour recevoir, en utilisation, le petit doigt de l'utilisateur.

11. Interface utilitaire pour la main telle que revendiquée dans l'une quelconque des revendications 1 à 9, dans laquelle le corps de bloc en mousse a trois canaux de réception de doigts pour la réception des index, deuxième et troisième doigts de l'utilisateur respectivement, mais aucun canal de réception de doigt pour la réception du petit doigt de l'utilisateur.

12. Interface utilitaire pour la main telle que revendiquée dans l'une quelconque des revendications 1 à 10, dans laquelle le corps de bloc en mousse est muni de canaux en forme de V pour une souplesse accrue.

13. Interface utilitaire pour la main telle que revendiquée dans l'une quelconque des revendications précédentes, dans laquelle les canaux de réception de doigts sont définis par des parois continues (116a à 116b, 117a à 117c ; 216a à 216b, 217a à 217c ; 316a à 316b, 317a à 317b ; 416a à 416b, 417a à 417b ; 516a à 516b, 517a à 517c ; 616a à 616b, 617a à 617b) du corps de bloc en mousse.

14. Interface utilitaire pour la main telle que revendiquée dans l'une quelconque des revendications 1 à 12, dans laquelle les canaux de réception de doigts sont définis par des parois intermittentes (716a à 716b, 717a à 717c) du corps de bloc en mousse.

15. Interface utilitaire pour la main telle que revendiquée dans l'une quelconque des revendications précédentes, dans laquelle le corps de bloc en mousse est muni d'une partie de réception de paume (112 ; 212 ; 312 ; 412 ; 512 ; 712) formée pour recevoir la paume de l'utilisateur.

16. Interface utilitaire pour la main telle que revendiquée dans la revendication 15, dans laquelle la partie de réception de paume a un profil en dôme.

17. Interface utilitaire pour la main telle que revendiquée dans l'une quelconque des revendications précédentes, dans laquelle un ou plusieurs des canaux de réception de doigts sont munis d'une coiffe de bout de doigt partielle (518a à 518d ; 718a à 718d).

18. Interface utilitaire pour la main telle que revendiquée dans l'une quelconque des revendications précédentes, dans laquelle un ou plusieurs des canaux de réception de doigts sont munis d'éléments en saillie (521a à 521d, 522a à 522d ; 721a à 721d, 722a à 722d).

19. Interface utilitaire pour la main telle que revendiquée dans l'une quelconque des revendications précédentes, dans laquelle les canaux de réception de doigts sont définis en partie par des parois de séparation intérieures ayant une hauteur qui augmente depuis l'extrémité de bout de doigt jusqu'à l'extrémité de réception de paume du corps pour définir une saillie en arcade (527a à 527c ; 727a à 727c), qui agit de manière à retenir la partie supérieure de la main de l'utilisateur sur le corps.

20. Interface utilitaire pour la main telle que revendiquée dans l'une quelconque des revendications 1 à 16, fabriquée par un procédé de découpe par déformation.

21. Interface utilitaire pour la main telle que revendiquée dans l'une quelconque des revendications 15 à 19, fabriquée par un procédé de moulage par injection ou par réaction.
